(19) Europäisches Patentamt
European Patent Office
Office européen des brevets

(11) EP 4 210 048 A1

(12) EUROPEAN PATENT APPLICATION
published in accordance with Art. 153(4) EPC

(43) Date of publication:
12.07.2023 Bulletin 2023/28

(51) International Patent Classification (IPC):
G10L 19/008 (2013.01)        G10L 21/0388 (2013.01)
H04S 7/00 (2006.01)

(21) Application number: 21864145.4

(22) Date of filing: 20.08.2021

(52) Cooperative Patent Classification (CPC):
G10L 19/008; G10L 21/0388; H04S 7/00

(86) International application number:
PCT/JP2021/030599

(87) International publication number:
WO 2022/050087 (10.03.2022 Gazette 2022/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 03.09.2020  JP 2020148234

(71) Applicant: Sony Group Corporation
Minato-Ku, Tokyo, 108-0075 (JP)

(72) Inventors:
• HONMA Hiroyuki
  Tokyo 108-0075 (JP)
• CHINEN Toru
  Tokyo 108-0075 (JP)
• KONO Akifumi
  Tokyo 108-0075 (JP)

(74) Representative: 2SPL Patentanwälte PartG mbB
Landaubogen 3
81373 München (DE)

(54) **SIGNAL PROCESSING DEVICE AND METHOD, LEARNING DEVICE AND METHOD, AND PROGRAM**

(57) The present technology relates to signal processing device and method, learning device and method, and a program that enable even an inexpensive device to perform audio replaying with high quality.

A signal processing device includes: a decoding processing unit that demultiplexes an input bit stream into a first audio signal, meta data of the first audio signal, and first high-frequency band information for expanding a band; a band expanding unit that performs band expansion processing on the basis of a second audio signal and second high-frequency band information and thereby generates an output audio signal, the second audio signal being obtained by performing signal processing on the basis of the first audio signal and the meta data, the second high-frequency band information being generated on the basis of the first high-frequency band information. The present technology can be applied to a smartphone.

Fig. 7

**Description**

[Technical Field]

The present technology relates to a signal processing device and method, a learning device and method, and a program, and particularly to a signal processing device and method, a learning device and method, and a program that enable even an inexpensive device to perform audio replaying with high quality.

[Background Art]

In the related art, object audio technologies are used in movies, games, and the like, and coding schemes for handling object audio have also been developed. Specifically, the Moving Picture Experts Group (MPEG)-H Part 3: 3D audio standard, which is an international standard, for example, is known (see NPL 1, for example).

In such a coding scheme, it is possible to deal with a moving sound source or the like as an independent audio object (hereinafter, also simply referred to as an object) like a conventional two-channel stereo scheme or a multi-channel stereo scheme of 5.1 channels or the like, and to code position information of the object along with signal data of the audio object as meta data.

It is thus possible to perform replaying in various audiovisual environments in which the number and arrangement of speakers are different. Also, it is possible to process sound from a specific sound source at the time of replaying, such as adjustment of volume of sound from a specific sound source and addition of an effect to sound from a specific sound source, which have been difficult in the conventional coding schemes.

In such a coding scheme, a bit stream is decoded on a decoding side, and an object signal which is an audio signal of the object and meta data including object position information indicating the position of the object in a space are obtained.

Then, rendering processing of rendering the object signal to each of a plurality of virtual speakers virtually arranged in the space is performed on the basis of the object position information. In the standard of NPL 1, for example, a scheme called three-dimensional vector based amplitude panning (hereinafter, simply referred to as VBAP) is used for the rendering processing.

Also, once a virtual speaker signal corresponding to each virtual speaker is obtained through the rendering processing, head related transfer function (HRTF) processing is performed on the basis of the virtual speaker signals. In the HRTF processing, output audio signals to output sound from an actual headphone and a speaker as if the sound were being replayed by virtual speakers are generated.

In a case where such object audio is actually replayed, and it is possible to arrange a lot of actual speakers in a space, replaying based on the virtual speaker signals is performed. Also, when it is not possible to arrange a lot of speakers and the object audio is replayed by a small number of speakers such as a headphone and a sound bar, replaying based on the aforementioned output audio signal is performed.

On the other hand, lowering of storage prices and an increase in bandwidths of networks in recent years have enabled so-called high-resolution sound sources, that is, high-resolution sound sources with sampling frequencies of equal to or greater than 96 kHz to be enjoyed.

According to the coding scheme described in NPL 1, it is possible to use a technology such as spectral band replication (SBR) as a technology for coding high-resolution sound sources efficiently.

In SBR, for example, average amplitude information of high-frequency sub-band signals is coded in the amount corresponding to the number of high-frequency sub-bands and is then transmitted without coding a high-frequency component of a spectrum, on the coding side.

Then, on the decoding side, a final output signal including a low-frequency component and a high-frequency component is generated on the basis of the low-frequency sub-band signals and the average amplitude information of the high-frequency band. It is thus possible to realize audio replaying with higher quality.

In this method, an audiovisual property that humans are not sensitive to changes in phases of high-frequency signal components and cannot perceive differences in a case where outlines of frequency envelopes thereof are close to their original signals is used, and such a method is widely known as a band expanding technology in general.

[Citation List]

[Non Patent Literature]

[NPL 1]
INTERNATIONAL STANDARD ISO/IEC 23008-3 Second edition 2019-02 Information technology-High efficiency coding and media delivery in heterogeneous environments-Part 3: 3D audio

[Summary]

[Technical Problem]

Incidentally, in a case where band expansion is performed on the aforementioned object audio in combination with rendering processing and HRTF processing, the band expansion processing is performed on the object signal of each object, and the rendering processing or the HRTF processing is then performed thereon.

In such a case, the band expansion processing is independently performed the number of times corresponding to the number of objects, and the processing load, that is, the amount of arithmetic operation thus increases. Also, since the rendering processing or the HRTF processing is performed on a signal with a higher sampling frequency, which has been obtained through the band expansion, as a target after the band expansion processing, the processing load thus further increases.

It is thus not possible for an inexpensive device such as a device such as an inexpensive processor or battery, that is, a device with low arithmetic operation ability, a device with low battery capacity, or the like to perform the band expansion, and as a result, it is not possible to perform audio replaying with high quality.

The present technology was made in view of such circumstances, and an object thereof is to enable even an inexpensive device to perform audio replaying with high quality.

[Solution to Problem]

A signal processing device according to a first aspect of the present technology includes: a decoding processing unit that demultiplexes an input bit stream into a first audio signal, meta data of the first audio signal, and first high-frequency band information for expanding a band; and a band expanding unit that performs band expansion processing on the basis of a second audio signal and second high-frequency band information and thereby generates an output audio signal, the second audio signal being obtained by performing signal processing on the basis of the first audio signal and the meta data, the second high-frequency band information being generated on the basis of the first high-frequency band information.

A signal processing method or program according to the first aspect of the present technology includes the steps of: demultiplexing an input bit stream into a first audio signal, meta data of the first audio signal, and first high-frequency band information for expanding a band; and performing band expansion processing on the basis of a second audio signal and second high-frequency band information and thereby generating an output audio signal, the second audio signal being obtained by performing signal processing on the basis of the first audio signal and the meta data, the second high-frequency band information being generated on the basis of the first high-frequency band information.

In the first aspect of the present technology, the input bit stream is demultiplexed into the first audio signal, the meta data of the first audio signal, and the first high-frequency band information for expanding a band, the band expansion processing is performed on the basis of the second audio signal and the second high-frequency band information, and the output audio signal is thereby generated, the second audio signal being obtained by performing signal processing on the basis of the first audio signal and the meta data, the second high-frequency band information being generated on the basis of the first high-frequency band information.

A learning device according to a second aspect of the present technology includes: a first high-frequency band information calculation unit that generates first high-frequency band information for expanding a band on the basis of a second audio signal generated by signal processing based on a first audio signal and a first coefficient; a second high-frequency band information calculation unit that generates second high-frequency band information for expanding a band on the basis of a third audio signal generated by the signal processing based on the first audio signal and a second coefficient; and a high-frequency band information learning unit that performs learning using the second high-frequency band information as training data on the basis of the first coefficient, the second coefficient, the first high-frequency band information, and the second high-frequency band information and generates coefficient data for obtaining the second high-frequency band information from the first coefficient, the second coefficient, and the first high-frequency band information.

A learning method or a program according to the second aspect of the present technology includes the steps of: generating first high-frequency band information for expanding a band on the basis of a second audio signal generated by signal processing based on a first audio signal and a first coefficient; generating second high-frequency band information for expanding a band on the basis of a third audio signal generated by the signal processing based on the first audio signal and a second coefficient; and performing learning using the second high-frequency band information as training data on the basis of the first coefficient, the second coefficient, the first high-frequency band information, and the second high-frequency band information and thereby generating coefficient data for obtaining the second high-frequency band information from the first coefficient, the second coefficient, and the first high-frequency band information.

In the second aspect of the present technology, the first high-frequency band information for expanding a band is generated on the basis of the second audio signal generated by the signal processing based on the first audio signal and the first coefficient, the second high-frequency band information for expanding a band is generated on the basis of the third audio signal generated by the signal processing based on the first audio signal and the second coefficient, the learning is performed using the second high-frequency band information as training data on the basis of the first coefficient, the second coefficient, the first high-frequency band information, and the second high-frequency band information, and the coefficient data for obtaining the second high-frequency band information is thereby generated from the first coefficient, the second coefficient, and the first high-frequency band information.

[Brief Description of Drawings]

[Fig. 1]

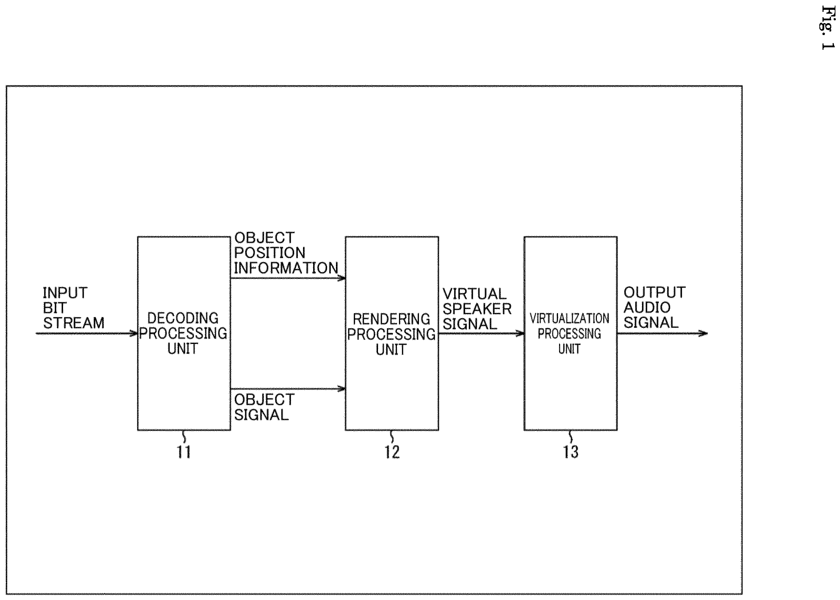

Fig. 1 is a diagram for explaining generation of an output audio signal.
[Fig. 2]

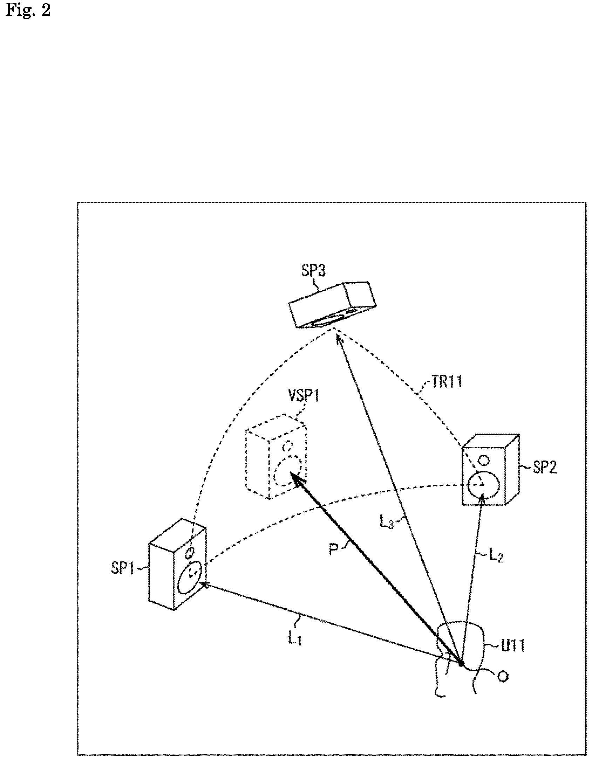

Fig. 2 is a diagram for explaining VBAP.
[Fig. 3]

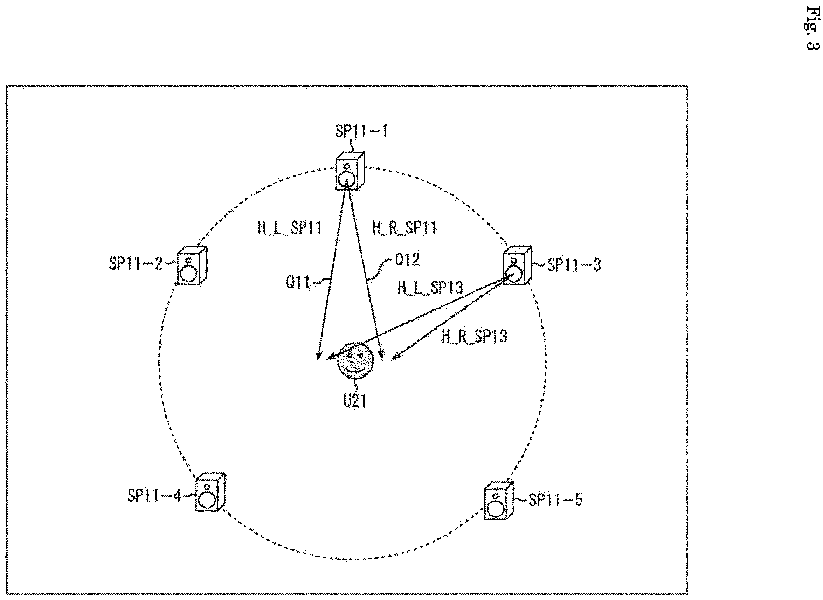

Fig. 3 is a diagram for explaining HRTF processing.
[Fig. 4]

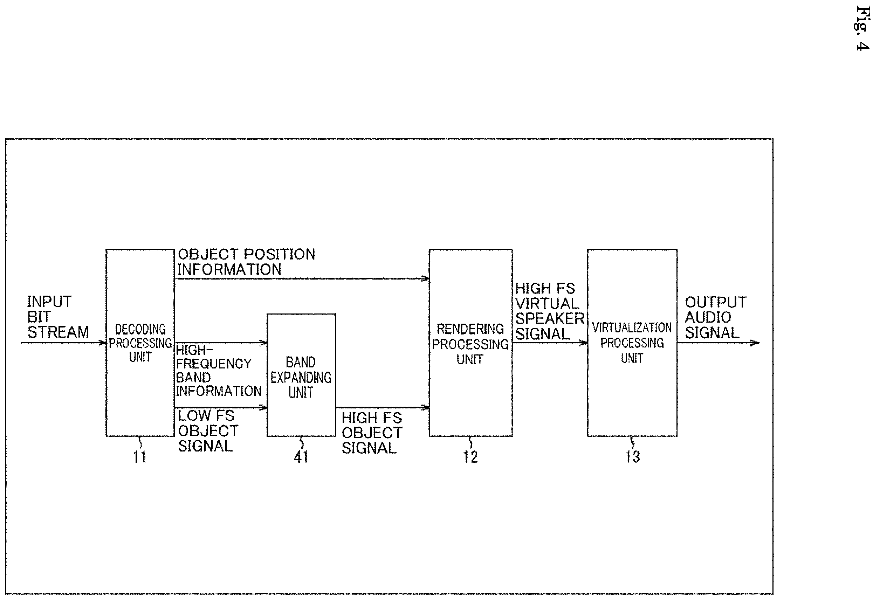

Fig. 4 is a diagram for explaining band expansion processing.
[Fig. 5]

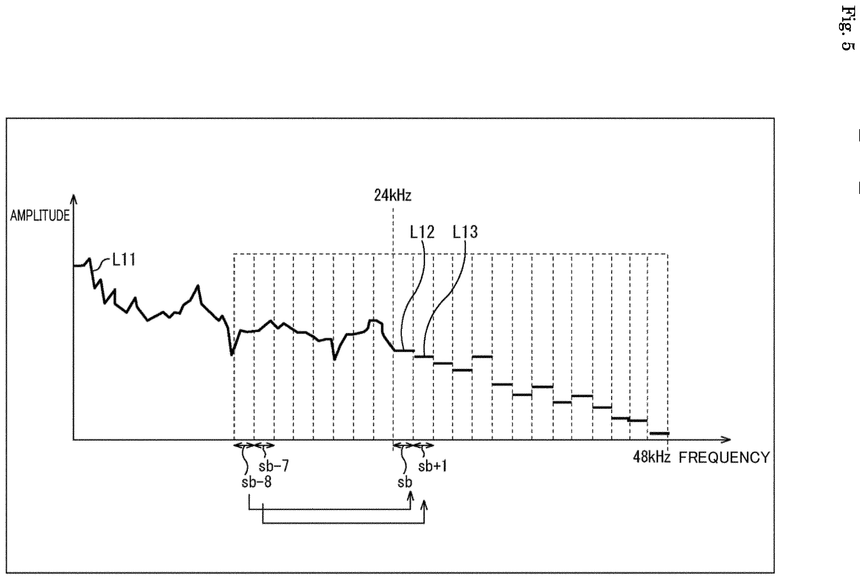

Fig. 5 is a diagram for explaining band expansion processing.
[Fig. 6]

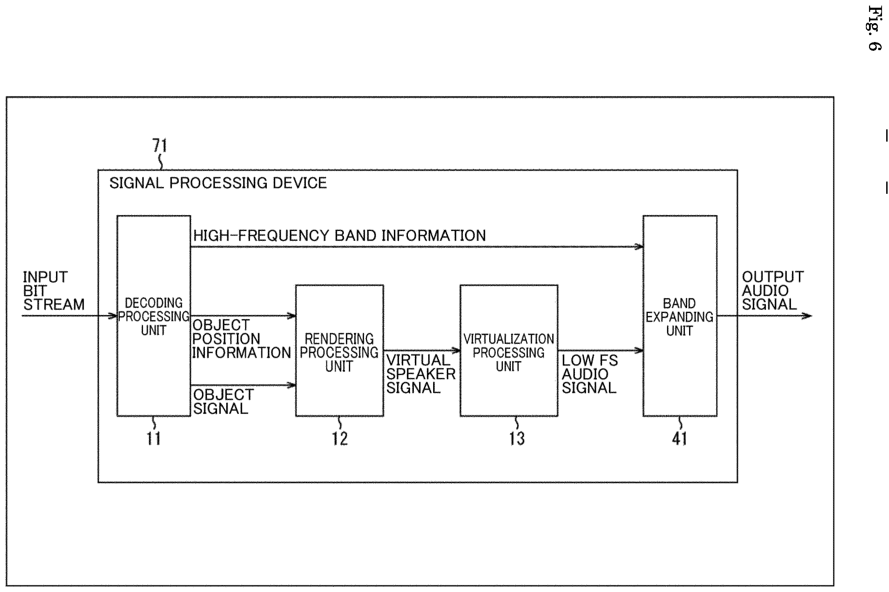

Fig. 6 is a diagram illustrating a configuration example of a signal processing device.
[Fig. 7]

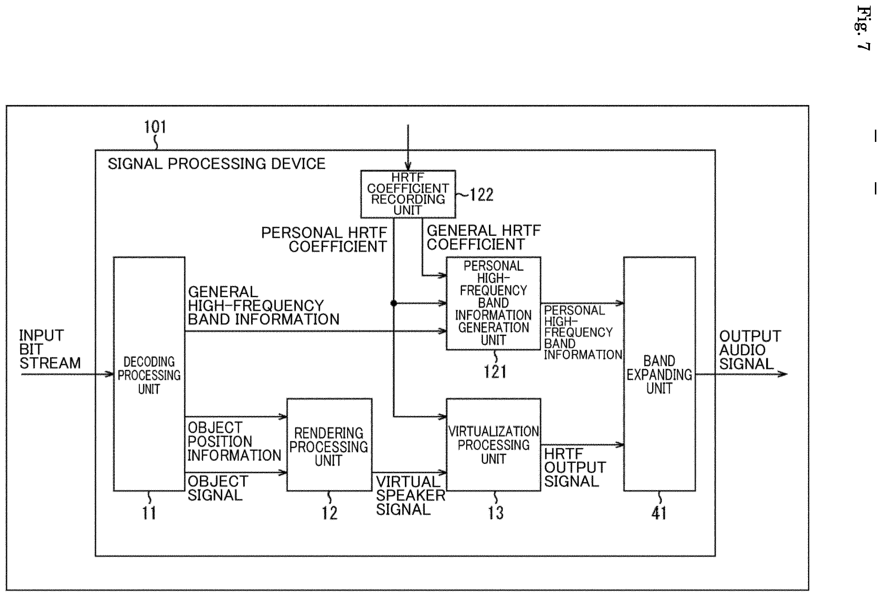

Fig. 7 is a diagram illustrating a configuration example of a signal processing device to which the present technology is applied.
[Fig. 8]

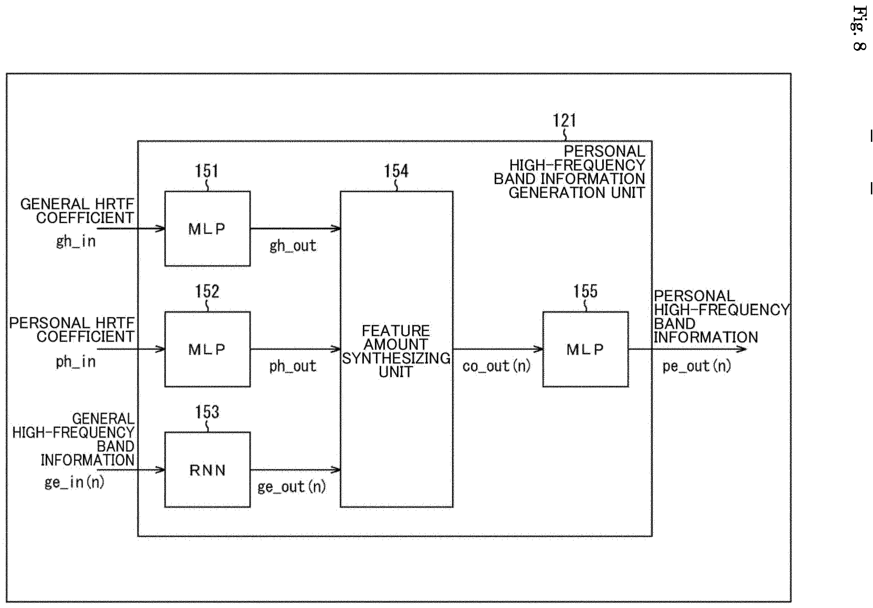

Fig. 8 is a diagram illustrating a configuration example of a personal high-frequency band information generation unit.
[Fig. 9]

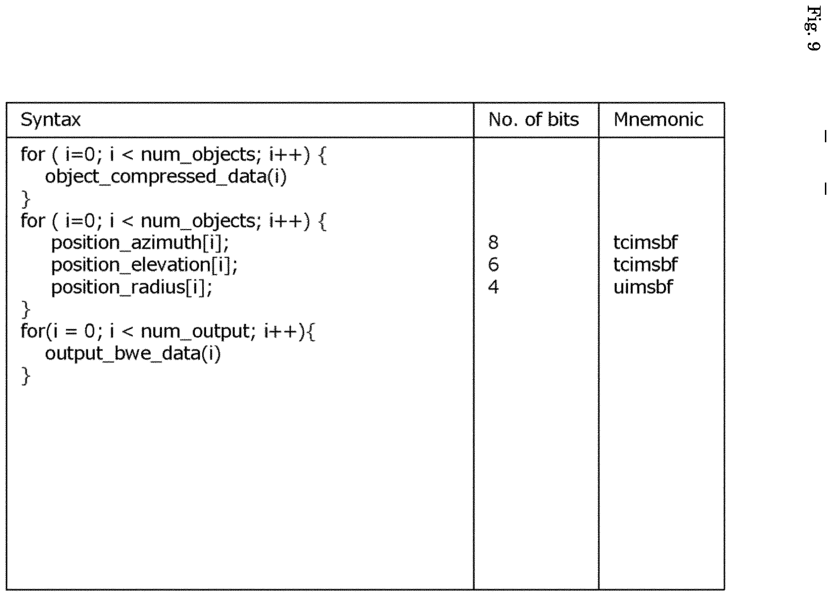

Fig. 9 is a diagram illustrating a syntax example of an input bit stream.
[Fig. 10]

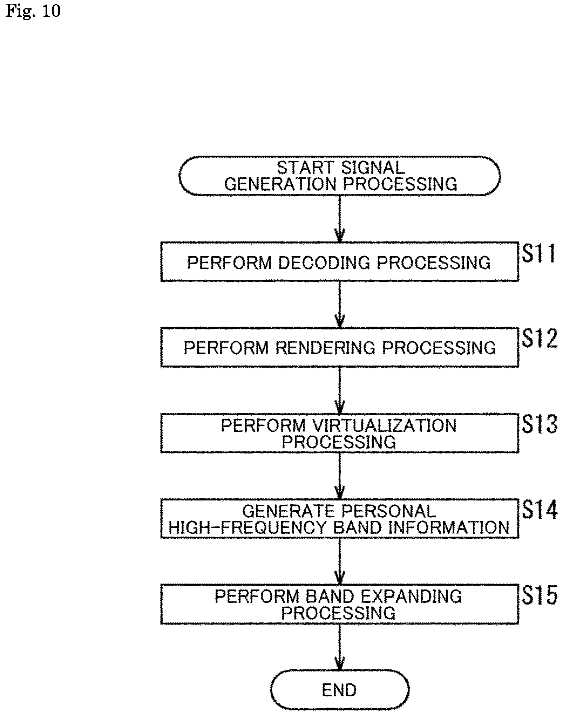

Fig. 10 is a flowchart for explaining signal generation processing.
[Fig. 11]

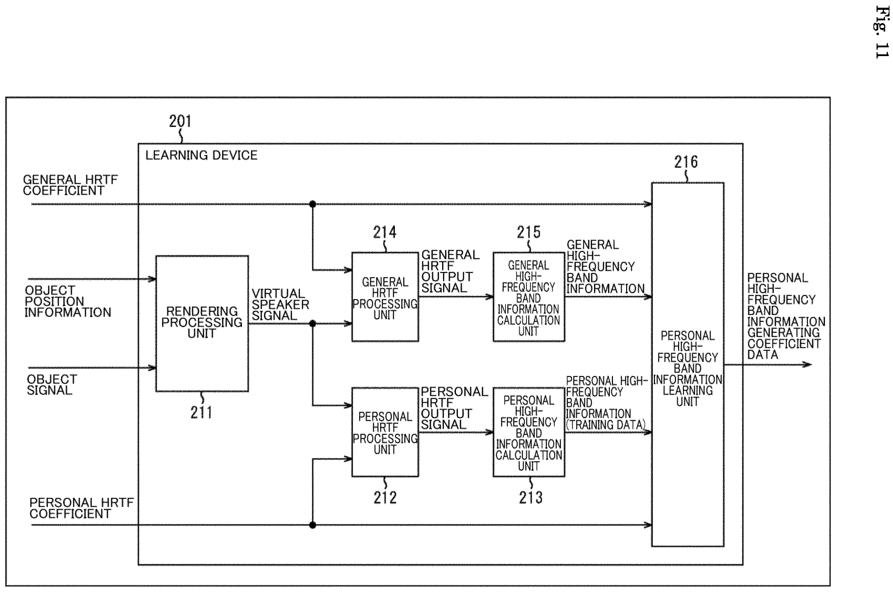

Fig. 11 is a diagram illustrating a configuration example of a learning device.
[Fig. 12]

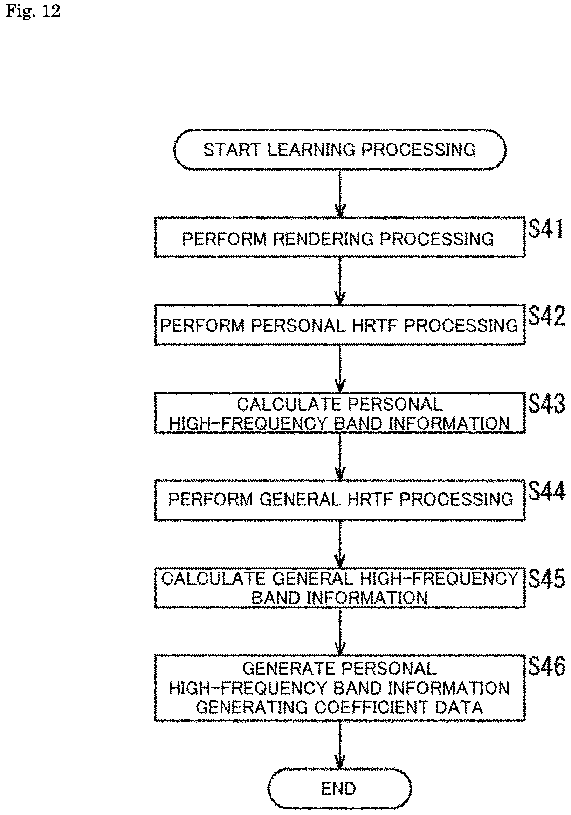

Fig. 12 is a flowchart for explaining learning processing.
[Fig. 13]

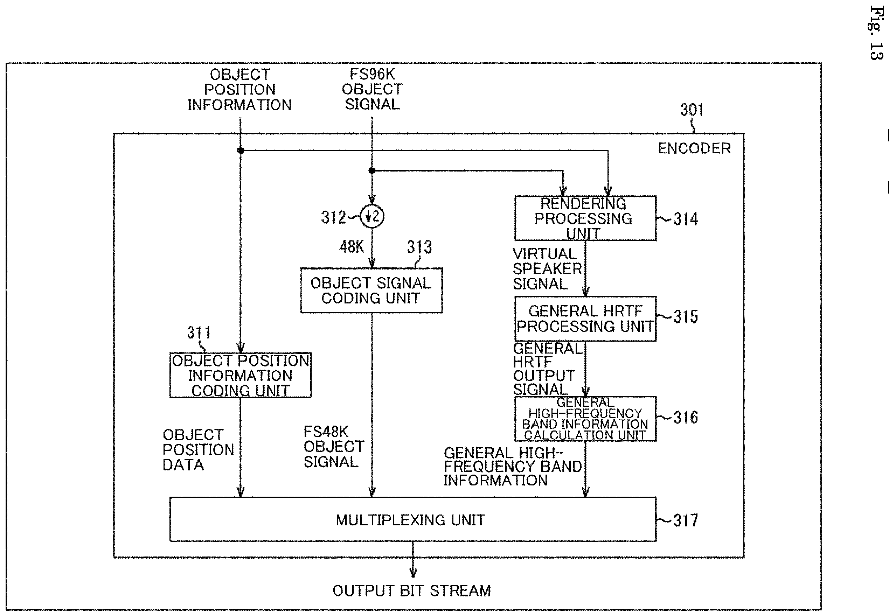

Fig. 13 is a diagram illustrating a configuration example of an encoder.
[Fig. 14]

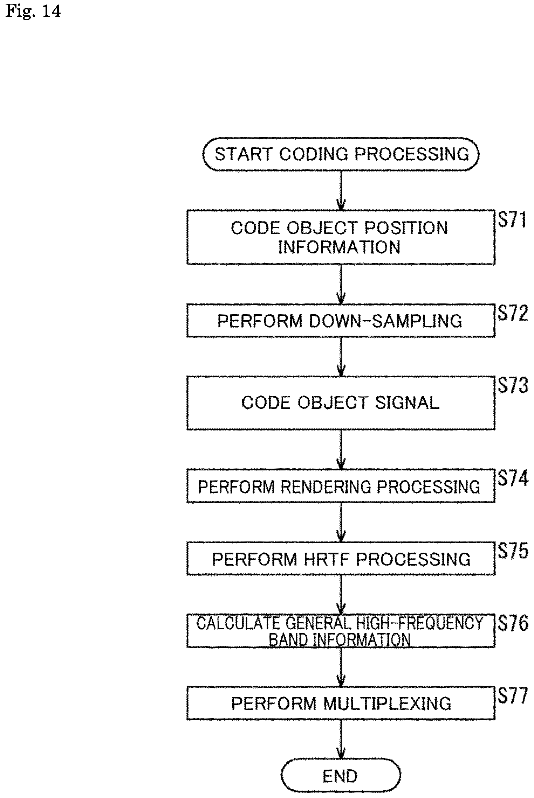

Fig. 14 is a flowchart for explaining coding processing.
[Fig. 15]

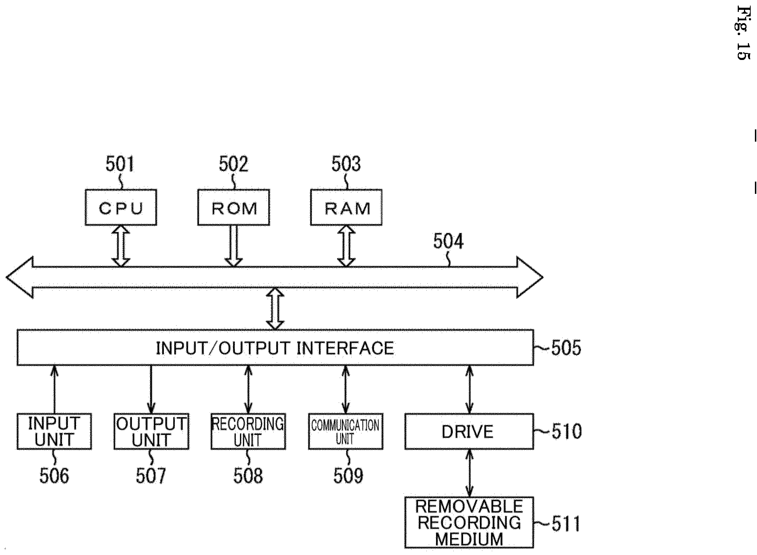

Fig. 15 is a diagram illustrating a configuration example of a computer.

[Description of Embodiments]

Hereinafter, embodiments to which the present technology is applied will be described with reference to the drawings.

<First embodiment>

<Concerning present technology>

According to the present technology, general high-frequency band information for band expansion processing on HRTF output signals as targets is multiplexed and transmitted in a bit stream in advance, and on a decoding side, high-frequency band information corresponding to a personal HRTF coefficient is generated on the basis of the personal HRTF coefficient, a general HRTF coefficient, and the high-frequency band information.
It is thus possible to perform decoding processing, rendering processing, and virtualization processing requiring high processing loads at low sampling frequencies and then perform band expansion processing on the basis of the high-frequency band information corresponding to the personal HRTF coefficient, and thereby to reduce the amount of arithmetic operation as a whole. As a result, it is possible to perform audio replaying with high quality on the basis of output audio signals at higher sampling frequencies even with an inexpensive device.

Particularly, according to the present technology, the high-frequency band information corresponding to the personal HRTF coefficient is generated on the decoding side, and there is thus no need to prepare the high-frequency band information for individual users on the coding side. Additionally, it is possible to perform audio replaying with higher quality than in a case where general high-frequency band information is used by generating the high-frequency band information corresponding to the personal HRTF coefficient on the decoding side.

Hereinafter, the present technology will be described in greater detail.

First, general processing performed when a bit stream obtained through coding by the coding scheme of the MPEG-H Part 3:3D audio standard is decoded and an output audio signal of object audio is generated will be described.

As illustrated in Fig. 1, for example, once an input bit stream obtained by coding (encoding) is input to a decoding processing unit 11, demultiplexing and decoding processing are performed on the input bit stream.

Through the decoding processing, an object signal that is an audio signal for replaying sound of an object configuring content (audio object) and meta data including object position information indicating the position of the object in a space are obtained.

Subsequently, a rendering processing unit 12 performs rendering processing of rendering the object signal to virtual speakers virtually arranged in the space on the basis of the object position information included in the meta data and generates a virtual speaker signal for replaying sound output from each virtual speaker.

Moreover, a virtualization processing unit 13 performs virtualization processing on the basis of the virtual speaker signal of each virtual speaker and generates an output audio signal for causing a replaying device such as a headphone that a user wears or a speaker arranged in an actual space to output sound.

The virtualization processing is processing in which an audio signal for realizing audio replaying as if replaying were performed with a channel configuration that is different from a channel configuration in an actual replaying environment is generated.

In this example, processing in which an output audio signal for realizing audio replaying as if sound were output from each virtual speaker regardless of the actual situation in which the sound is output from the replaying device such as a headphone is generated, for example, is virtualization processing.

Although the virtualization processing may be realized by any method, the following description will be continued on the assumption that HRTF processing is performed as the virtualization processing.

If sound is output from the actual headphone or speaker on the basis of the output audio signal obtained through the virtualization processing, it is possible to realize audio replaying as if the sound were replayed from the virtual speakers. Note that the speaker actually arranged in the actual space will be referred to as an actual speaker, in particular, below.

In a case where such object audio is replayed, it is possible to replay the output of the rendering processing as it is through the actual speaker when a lot of actual speakers can be arranged in the space.

On the other hand, when it is not possible to arrange a lot of actual speakers in the space, the replay is performed using a small number of actual speakers such as a headphone and a sound bar by performing HRTF processing. In general, the replay is performed using the headphone or a small number of actual speakers in many cases.

Here, general rendering processing and HRTF processing will be further described.

At the time of rendering, for example, rendering processing of a predetermined scheme such as the aforementioned VBAP is performed. VBAP is a rendering method that is generally called panning, and rendering is performed by distributing a gain to three virtual speakers that are closest to an object that is present on a sphere surface including a user position as an origin from among virtual speakers that are similarly present on the sphere surface.

As illustrated in Fig. 2, for example, it is assumed that a user U11 who is a listener is present in a three-dimensional space and three virtual speakers SP1 to SP3 are arranged in front of the user U11.

Here, the position of the head part of the user U11 is defined as an origin O, and the virtual speakers SP1 to SP3 are assumed to be located on a surface of a sphere around the origin O at the center.

Now, a situation in which an object is present within a region TR11 surrounded by the virtual speakers SP1 to SP3 on the sphere surface and a sound image is located at the position VSP1 of the object will be considered.

In such a case, gains are distributed to the virtual speakers SP1 to SP3 that are present around the position VSP1 for the object in the VBAP.

Specifically, the position VSP1 is assumed to be represented by a three-dimensional vector P starting from the origin O in a three-dimensional coordinate system including the origin O as a reference (origin) and ending at the position VSP1.

Also, if three-dimensional vectors starting from the origin O and ending at the positions of the virtual speakers SP 1 to SP3 are assumed to be vectors $L_1$ to $L_3$, then a vector P can be represented by a linear sum of the vectors $L_1$

to $L_3$ as represented by Expression (1) below.
[Math. 1]

$$P = g_1 L_1 + g_2 L_2 + g_3 L_3 \qquad \cdots (1)$$

Here, it is possible to localize a sound image at the position VSP1 by calculating coefficients $g_1$ to $g_3$ by which the vectors $L_1$ to $L_3$ are multiplied in Expression (1) and regarding these coefficients $g_1$ to $g_3$ as gains of sound output from each of the virtual speakers SP1 to SP3.

When a vector including the coefficients $g_1$ to $g_3$ as elements is defined as $g_{123} = [g_1, g_2, g_3]$, and a vector including the vectors L1 to L3 as elements is defined as $L_{123} = [L_1, L_2, L_3]$, it is possible to obtain Expression (2) below by deforming Expression (1) described above.
[Math. 2]

$$g_{123} = P^T L_{123}^{-1} \qquad \cdots (2)$$

It is possible to localize a sound image at the position VSP1 by outputting sound based on the object signal from each of the virtual speakers SP1 to SP3 using the coefficients $g_1$ to $g_3$ obtained by calculating Expression (2) as described above as gains.

Note that the disposition position of each of the virtual speakers SP1 to SP3 is fixed, information indicating the positions of the virtual speakers is known, and it is thus possible to obtain $L_{123}^{-1}$ which is an inverse matrix in advance.

A triangular region TR11 surrounded by three virtual speakers on the sphere surface illustrated in Fig. 2 is called a mesh. It is possible to localize sound of the object at an arbitrary position in the space by combining a lot of virtual speakers arranged in the space to configure a plurality of meshes.

If gains of the virtual speakers are obtained for each object in this manner, it is possible to obtain a virtual speaker signal for each virtual speaker by performing an arithmetic operation of Expression (3) below.
[Math. 3]

$$\begin{bmatrix} SP(0,t) \\ SP(1,t) \\ \vdots \\ SP(M-1,t) \end{bmatrix} = \begin{bmatrix} G(0,0) & G(0,1) & \cdots & G(0,N-1) \\ G(1,0) & G(1,1) & \cdots & G(1,N-1) \\ \vdots & \vdots & & \vdots \\ G(M-1,0) & G(M-1,1) & \cdots & G(M-1,N-1) \end{bmatrix} \begin{bmatrix} S(0,t) \\ S(1,t) \\ \vdots \\ S(N-1,t) \end{bmatrix}$$

$$\cdots (3)$$

Note that SP(m, t) in Expression (3) indicates the virtual speaker signal at the clock time t of the m-th (where m = 0, 1, ..., M - 1) virtual speaker from among M virtual speakers. Also, S(n, t) in Expression (3) indicates an object signal at the clock time t of the n-th (where n = 0, 1, ..., N - 1) object from among N objects.

Furthermore, G(m, n) in Expression (3) indicates a gain by which the object signal S(n, t) of the n-th object is multiplied in order to obtain the virtual speaker signal SP(m, t) for the m-th virtual speaker. In other words, the gain G(m, n) indicates a gain distributed to the m-th virtual speaker for the n-th object obtained by Expression (2) above.

In the rendering processing, the calculation of Expression (3) is processing that requires the highest calculation cost. In other words, the arithmetic operation of Expression (3) is the processing requiring the largest amount of arithmetic operation.

Next, an example of HRTF processing performed in a case where sound based on the virtual speaker signals obtained through the arithmetic operation of Expression (3) is replayed by a headphone or a small number of actual speakers will be described with reference to Fig. 3. Note that Fig. 3 illustrates an example in which virtual speakers are arranged in a two-dimensional horizontal surface for simplifying the explanation.

In Fig. 3, five virtual speakers SP11-1 to SP11-5 are circularly aligned and arranged in a space. Hereinafter, the virtual speakers SP11-1 to SP11-5 will be simply referred to as virtual speakers SP11 as well in a case where it is not particularly necessary to distinguish them from each other.

Also, a user U21 who is a listener is located at a position surrounded by the five virtual speakers SP11, that is, the center position of the circle on which the virtual speakers SP11 are arranged in Fig. 3. Therefore, an output audio signal for realizing audio replaying as if the user U21 listened to sound output from each of the virtual speakers SP11 is generated in the HRTF processing.

In particular, it is assumed in this example that the position where the user U21 is located is a listening position and sound based on the virtual speaker signals obtained by rendering for each of the five virtual speakers SP 11 is replayed by a headphone.

In such a case, the sound output (emitted) from the virtual speaker SP 11-1 on the basis of the virtual speaker signal passes through the path indicated by the arrow Q11 and reaches the eardrum of the left ear of the user U21, for example. Therefore, properties of the sound output from the virtual speaker SP11-1 should change depending on space transmission properties from the virtual speaker SP11-1 to the left ear of the user U21, the shapes of the face and the ears and reflection/absorption properties of the user U21, and the like.

Thus, it is possible to obtain an output audio signal for replaying sound from the virtual speaker SP11-1 that is considered to be listened to by the left ear of the user U21 by convolving a transmission function H_L_SP11 taking the space transmission properties from the virtual speaker SP11-1 to the left ear of the user U21 the shapes of the face and the ears and the reflection/absorption properties of the user U21, and the like into consideration to the virtual speaker signal for the virtual speaker SP11-1.

Similarly, sound output from the virtual speaker SP11-1 on the basis of the virtual speaker signal, for example, passes through a path indicated by the arrow Q12 and reaches the eardrum of the right ear of the user U21. Therefore, it is possible to obtain an output audio signal for replaying sound from the virtual speaker SP11-1 that is considered to be listened to by the right ear of the user U21 by convolving a transmission function H_R_SP11 taking space transmission properties from the virtual speaker SP11-1 to the right ear of the user U21, the shapes of the face and the ears and reflection/absorption properties of the user U21, and the like into consideration to the virtual speaker signal for the virtual speaker SP11-1.

Thus, it is only necessary to convolute the transmission function for the left ear for each virtual speaker to each virtual speaker signal for the left channel and to add each signal obtained as a result to obtain an output audio signal for the left channel when the sound based on the virtual speaker signals for the five virtual speakers SP11 is finally replayed by the headphone.

Similarly, in the case of the right channel, it is only necessary to convolute the transmission function for the right ear for each virtual speaker to each virtual speaker signal ad to add each signal obtained as a result to obtain an output audio signal for the right channel.

Note that HRTF processing that is similar to that in the case of the headphone is performed even in a case where the replaying device used for the replaying is an actual speaker instead of the headphone. However, since sound from the speaker reaches both the left and right ears of the user through space propagation, processing taking crosstalk into consideration is performed. Such processing is also called trans oral processing.

When the output audio signal for the left ear that is generally expressed by a frequency, that is, for the left channel is L(ω), and the output audio signal for the right ear that is expressed by a frequency, that is, for the right channel is R(ω), L(ω) and R(ω) can be obtained by calculating Expression (4) below.

[Math. 4]

$$\begin{bmatrix} L(\omega) \\ R(\omega) \end{bmatrix} = \begin{bmatrix} H\_L(0, \omega) & H\_L(1, \omega) & \cdots & H\_L(M-1, \omega) \\ H\_R(0, \omega) & H\_R(1, \omega) & \cdots & H\_R(M-1, \omega) \end{bmatrix} \begin{bmatrix} SP(0, \omega) \\ SP(1, \omega) \\ \vdots \\ SP(M-1, \omega) \end{bmatrix}$$

$$\cdots (4)$$

Note that ω in Expression (4) denotes a frequency, and SP(m, ω) denotes the virtual speaker signal at the frequency ω of the m-th (where m = 0, 1, ..., M - 1) virtual speaker from among the M virtual speakers. The virtual speaker signal SP (m, ω) can be obtained by performing time-frequency conversion on the aforementioned virtual speaker signal SP(m, t).

Also, H_L(m, ω) in Expression (4) denotes a transmission function for the left ear by which the virtual speaker signal SP(m, ω) for the m-th virtual speaker is multiplied in order to obtain the output audio signal L(co) for the left channel. Similarly, H_R(m, ω) denotes a transmission function of the right ear.

In a case where the transmission function H_L(m, ω) and the transmission function H_R(m, ω) for HRTF are expressed as impulse responses in a time domain, at least a length of about 1 second is needed. Therefore, in a case where the sampling frequency of the virtual speaker signal is 48 kHz, for example, it is necessary to perform convolution of 48000 taps, and a larger amount of arithmetic operation is still needed even if a high-speed arithmetic operation method using fast Fourier transform (FFT) is used for the convolution of the transmission function.

As described above, in a case where the output audio signal is generated by performing the decoding processing, the rendering processing, and the HRTF processing, and the headphone or a small number of actual speakers are used to replay the object audio, a large amount of arithmetic operation is needed. Also, the amount of arithmetic operation further increases correspondingly if the number of objects increases.

Next, band expansion processing will be described.

In general band expansion processing, that is, in SBR, a high-frequency band component of a spectrum of an audio signal is not coded on the coding side, and average amplitude information of the high-frequency sub-band signals of the high-frequency sub-bands in the high-frequency band is coded in accordance with the number of high-frequency sub-bands and is then transmitted to the decoding side.

Also, the low-frequency sub-band signal which is an audio signal obtained by decoding processing (decoding) is normalized with the average amplitude, and the normalized signal is copied to the high-frequency sub-band, on the decoding side. Then, a high-frequency sub-band signal is obtained by multiplying the signal obtained as a result by average amplitude information of each high-frequency sub-band, the low-frequency sub-band signal and the high-frequency sub-band signal are subjected to sub-band synthesis, and a final output audio signal is thereby obtained.

It is possible to perform audio replaying of a high-resolution sound source at a sampling frequency of equal to or greater than 96 kHz, for example, through such band expansion processing.

However, in a case where a signal at a sampling frequency of 96 kHz in the object audio is processed unlike the typical stereo audio, for example, rendering processing and the HRTF processing are performed on the object signal at 96 kHz obtained through the decoding regardless of whether the band expansion processing such as SBR is to be performed. Therefore, in a case where the number of objects or the number of virtual speakers is large, the calculation cost of the processing significantly increases, and high-performance processor and high power consumption are needed.

Here, an example of processing performed in a case where an output audio signal at 96 kHz is obtained through band expansion in object audio will be described with reference to Fig. 4. Note that the same reference signs are applied to parts in Fig. 4 corresponding to those in Fig. 1 and description thereof will be omitted.

If an input bit stream is supplied, then the decoding processing unit 11 performs demultiplexing and decoding processing, and an object signal obtained as a result and the object position information and the high-frequency band information of the object are output.

For example, the high-frequency band information is average amplitude information of the high-frequency sub-band signal obtained from the object signal before the coding.

In other words, the high-frequency band information is band expanding information for band expansion that corresponds to the object signal obtained through the decoding processing and indicates the size of each sub-band component on the high-frequency band side of the object signal before the coding at a higher sampling frequency. Note that although the average amplitude information of the high-frequency sub-band signal is used as the band expansion information since the example of SBR is described here, the band expansion information for the band expansion processing may be any information such as a representative value of the amplitude of each sub-band on the high-frequency band side of the object signal before the coding or information indicating the shape of the frequency envelope.

Also, the object signal obtained through the decoding processing is assumed to be one at a sampling frequency of 48 kHz, for example, and such an object signal will also be referred to as a low FS object signal below.

After the decoding processing, the band expanding unit 41 performs band expansion processing on the basis of the high-frequency band information and the low FS object signal ad obtains an object signal at a higher sampling frequency. In this example, it is assumed that an object signal at a sampling frequency of 96 kHz, for example, is obtained through the band expansion processing, and such an object signal will also be referred to as a high FS object signal below.

Also, the rendering processing unit 12 performs rendering processing on the basis of the object position information obtained through the decoding processing and the high FS object signal obtained through the band expansion processing. In this example, in particular, the virtual speaker signal at a sampling frequency of 96 kHz is obtained through the rendering processing, and such a virtual speaker signal will also be referred to as high FS virtual speaker signal below.

Furthermore, the virtualization processing unit 13 then performs virtualization processing such as HRTF processing on the basis of the high FS virtual speaker signal and obtains an output audio signal at a sampling frequency of 96 kHz.

Here, general band expansion processing will be described with reference to Fig. 5.

Fig. 5 illustrates a frequency amplitude property of a predetermined object signal. Note that in Fig. 5, the vertical axis represents an amplitude (power) while the horizontal axis represents a frequency.

For example, a polygonal line L11 represents a frequency amplitude property of a low FS object signal supplied to the band expanding unit 41. The low FS object signal has a sampling frequency of 48 kHz, and the low FS object signal does not include a signal component in a frequency band of equal to or greater than 24 kHz.

Here, the frequency band up to 24 kHz, for example, is split into a plurality of low-frequency sub-bands including low-frequency sub-bands sb-8 to sb-1, and the signal component of each of these low-frequency sub-bands is a low-frequency sub-band signal. Similarly, the frequency band from 24 kHz to 48 kHz is split into high-frequency sub-bands sb to sb+13, and a signal component of each of these high-frequency sub-bands is a high-frequency sub-band signal.

Also, high-frequency band information indicating an average amplitude information of these high-frequency sub-bands in regard to each of the high-frequency sub-bands sb to sb+13 is supplied to the band expanding unit 41.

In Fig. 5, for example, the straight line L12 represents average amplitude information supplied as high-frequency band information of the high-frequency sub-band sb, and the straight line L13 represents average amplitude information supplied as high-frequency band information of the high-frequency sub-band sb+1.

In the band expanding unit 41, a low-frequency sub-band signal is normalized with an average amplitude value of the low-frequency sub-band signals, and the signal obtained through the normalization is copied (mapped) to the high-frequency side. Here, the low-frequency sub-band as a copy source and the high-frequency sub-band as a copy destination of the low-frequency sub-band are defined in advance by an expansion frequency band or the like.

For example, the low-frequency sub-band signal of the low-frequency sub-band sb-8 is normalized, and the signal obtained through the normalization is copied to the high-frequency sub-band sb.

More specifically, modulation processing is performed on the signal after the normalization of the low-frequency sub-band signal of the low-frequency sub-band sb-8, and the signal is converted into a signal of a frequency component of the high-frequency sub-band sb.

Similarly, the low-frequency sub-band signal of the low-frequency sub-band sb-7 is copied to the high-frequency sub-band sb+1 after the normalization, for example.

Once the thus normalized low-frequency sub-band signal is copied (mapped) to the high-frequency sub-band, the signal copied to each high-frequency sub-band is multiplied by average amplitude information indicated by the high-frequency band information of each piece of high-frequency sub-band, and a high-frequency sub-band signal is thereby generated.

In the high-frequency sub-band sb, for example, the signal obtained by normalizing the low-frequency sub-band signal of the low-frequency sub-band sb-8 and copying it to the high-frequency sub-band sb is multiplied by the average amplitude information indicated by the straight line L12, and the result is obtained as a high-frequency sub-band signal of the high-frequency sub-band sb.

Once the high-frequency sub-band signal is obtained for each high-frequency sub-band, each low-frequency sub-band signal and each high-frequency sub-band signal are input to and filtered (synthesized) by a band synthesizing filter for sampling at 96 kHz, and a high FS object signal obtained as a result is output. In other words, a high FS object signal at a sampling frequency up-sampled (band-expanded) to 96 kHz is obtained.

In the example illustrated in Fig. 4, band expansion processing of generating the high FS object signal as described above is performed independently for each low FS object signal included in the input bit stream, that is, for each object in the band expanding unit 41.

Therefore, in a case where the number of objects is thirty two, for example, the rendering processing unit 12 has to perform rendering processing of the high FS object signal at 96 kHz on each of the thirty two objects.

Similarly, HRTF processing (virtualization processing) of the high FS virtual speaker signal at 96 kHz has to be performed the number of times corresponding to the number of virtual speakers even in the virtualization processing unit 13 in the later stage thereof as well.

As a result, the processing load in the entire device significantly increases. This applies to a case where the sampling frequency of the audio signal obtained by decoding processing without performing the band expansion processing is 96 kHz.

Thus, calculating high-frequency band information of a signal after virtualization processing with a high resolution, that is, at a high sampling frequency in advance at the time of coding, multiplexing it to an input bit stream, and transferring it are conceivable.

In this manner, it is possible to perform the decoding processing, the rendering processing, and the HRTF processing requiring high processing loads at low sampling frequencies and to perform band expansion processing based on the transferred high-frequency band information on the final signal after the HRTF processing, for example. It is thus possible to reduce the processing load as a whole and to enable an inexpensive processor or battery to realize audio replaying with high quality.

In such a case, the signal processing device on the decoding side can be configured as illustrated in Fig. 6, for example. Note that the same reference signs will be applied to parts in Fig. 6 corresponding to those in the case of Fig. 4 and description thereof will be appropriately omitted.

The signal processing device 71 illustrated in Fig. 6 is configured of a smartphone or a personal computer, for example, and includes a decoding processing unit 11, a rendering processing unit 12, a virtualization processing unit 13, and a band expanding unit 41.

In the example illustrated in Fig. 4, each kind of processing is performed in the order of the decoding processing, the band expansion processing, the rendering processing, and the virtualization processing.

On the other hand, each kind of processing (signal processing) is performed in the order of the decoding processing, the rendering processing, the virtualization processing, and the band expansion processing in the signal processing device 71. In other words, the band expansion processing is performed at last.

Therefore, demultiplexing and decoding processing of the input bit stream is performed first by the decoding processing unit 11 in the signal processing device 71.

The decoding processing unit 11 supplies high-frequency band information obtained through the demultiplexing and the decoding processing to the band expanding unit 41 and supplies the object position information and the object signal to the rendering processing unit 12.

Here, the input bit stream includes high-frequency band information corresponding to the output of the virtualization processing unit 13, and the decoding processing unit 11 supplies high-frequency band information to the band expanding unit 41.

Also, the rendering processing unit 12 performs rendering processing such as VBAP on the basis of the object position information and the object signal supplied from the decoding processing unit 11 and supplies a virtual speaker signal obtained as a result to the virtualization processing unit 13.

The virtualization processing unit 13 performs HRTF processing as virtualization processing. In other words, the virtualization processing unit 13 performs, as HRTF processing, convolution processing based on the virtual speaker signal supplied from the rendering processing unit 12 and the HRTF coefficient corresponding to a transmission function given in advance and addition processing of adding signals obtained as a result. The virtualization processing unit 13 supplies an audio signal obtained through the HRTF processing to the band expanding unit 41.

In this example, the object signal supplied from the decoding processing unit 11 to the rendering processing unit 12 is a low FS object signal at a sampling frequency of 48 kHz, for example.

In such a case, since the virtual speaker signal supplied from the rendering processing unit 12 to the virtualization processing unit 13 is also a signal at a sampling frequency of 48 kHz, and the sampling frequency of the audio signal supplied from the virtualization processing unit 13 to the band expanding unit 41 is also 48 kHz.

Hereinafter, the audio signal supplied from the virtualization processing unit 13 to the band expanding unit 41 will also be referred to as a low FS audio signal, in particular. Such a low FS audio signal is a drive signal that is obtained by performing signal processing such as rendering processing and virtualization processing on the object signal and drives a replaying device such as a headphone or an actual speaker to cause it to output sound.

The band expanding unit 41 generates an output audio signal by performing band expansion processing on the low FS audio signal supplied from the virtualization processing unit 13 on the basis of the high-frequency band information supplied from the decoding processing unit 11 and outputs the output audio signal to a later stage. The output audio signal obtained by the band expanding unit 41 is a signal at a sampling frequency of 96 kHz, for example.

Incidentally, it is well known that the HRTF coefficient used in the HRTF processing as virtualization processing greatly depends on shapes of ears and faces of the individual users who are listeners.

Since it is difficult for a general headphone or the like that is compatible with virtual surroundings to acquire personal HRTF coefficient suitable for the individual users, an HRTF coefficient that is general for average shapes of ears and faces, that is, so-called a general HRTF coefficient is used in many cases.

However, it is known that in a case where the general HRTF coefficient is used, a sense of localization of sound sources and sound quality itself are significantly degraded as compared with a case where a personal HRTF coefficient is used.

Therefore, a measurement method for more simply acquiring HRTF coefficients suitable for individual users has also been proposed, and such a measurement method is described in detail in WO 2018/110269, for example.

Hereinafter, a general HRTF coefficient measured or generated for average shapes of human ears and faces will also be referred to as a general HRTF coefficient, in particular.

Also, an HRTF coefficient that is measured or generated for each of individual users and corresponds to the shapes of ears and a face of the user, that is, an HRTF coefficient for each of the individual users will also be referred to as a personal HRTF coefficient, in particular.

Note that the personal HRTF coefficient is not limited to one measured or generated for each of the individual users and may be an HRTF coefficient that is suitable for each of the individual users and is selected on the basis of information related to each of the individual users, such as approximate shapes of ears and face of the user, an age, a gender, and the like from among a plurality of HRTF coefficients measured or generated for each of the shapes of ears and faces.

As described above, the HRTF coefficient suitable for a user is different for each user.

For example, it is desirable that high-frequency band information corresponding to the personal HRTF coefficient be employed as high-frequency band information used by the band expanding unit 41 on the assumption that the virtualization processing unit 13 of the signal processing device 71 illustrated in Fig. 6 uses the personal HRTF coefficient.

However, the high-frequency band information included in the input bit stream is general high-frequency band information that assumes that band expansion processing is performed on an audio signal obtained by performing HRTF processing using the general HRTF coefficient.

Therefore, if the high-frequency band information included in the input bit stream is used as it is to perform the band expansion processing on the audio signal obtained by performing the HRTF processing using the personal HRTF coefficient, significant degradation of sound quality may occur in the obtained output audio signal.

On the other hand, it is not easy to store and transmit high-frequency band information (personal high-frequency band information) generated for each user, that is, for each personal HRTF coefficient by assuming in advance that the personal HRTF coefficient is used, in terms of operations.

This is because it is necessary to prepare an input bit stream for each of users (individuals) who replay object audio and to prepare personal high-frequency band information corresponding to the personal HRTF coefficient for each personal HRTF coefficient. To do so, the storage capacity of a server or the like on the side of distribution of the audio object (input bit stream), that is, on the coding side is also oppressed.

Thus, according to the present technology, the personal high-frequency band information is generated on the side of the replaying device (decoding side) using the general high-frequency band information, the general HRTF coefficient, and the personal HRTF coefficient on the assumption of the general HRTF coefficient.

In this manner, it is possible to perform the decoding processing, the rendering processing, and the HRTF processing requiring high processing loads at low sampling frequencies, for example, and to perform band expansion processing based on the thus generated personal high-frequency band information on the final signal after the HRTF processing. Therefore, it is possible to reduce the processing load as a whole and to enable an inexpensive processor or battery to realize audio replaying with high quality.

<Configuration example of signal processing device>

Fig. 7 is a diagram illustrating a configuration example of an embodiment of the signal processing device 101 to which the present technology is applied. Note that the same reference signs will be applied to parts in Fig. 7 corresponding to the case in Fig. 6 and description thereof will be appropriately omitted.

The signal processing device 101 is configured of, for example, a smartphone or a personal computer and includes a decoding processing unit 11, a rendering processing unit 12, a virtualization processing unit 13, a personal high-frequency band information generation unit 121, an HRTF coefficient recording unit 122, and a band expanding unit 41.

The configuration of the signal processing device 101 is different from the configuration of the signal processing device 71 in that the personal high-frequency band information generation unit 121 and the HRTF coefficient recording unit 122 are newly provided and is the same as the configuration of the signal processing device 71 in the other points.

The decoding processing unit 11 acquires (receives), from a server or the like, which is not illustrated, an input bit stream including a coded object signal of object audio, meta data including object position information and the like, general high-frequency band information, and the like.

The general high-frequency band information included in the input bit stream is basically the same as the high-frequency band information included in the input bit stream acquired by the decoding processing unit 11 of the signal processing device 71.

The decoding processing unit 11 demultiplexes the input bit stream acquired through reception or the like, and coded object signal and meta data to general high-frequency band information and decodes the coded object signal and meta data.

The decoding processing unit 11 supplies general high-frequency band information obtained through demultiplexing and decoding processing on the input bit stream to the personal high-frequency band information generation unit 121 and supplies the object position information and the object signal to the rendering processing unit 12.

Here, the input bit stream includes general high-frequency band information corresponding to an output of the virtualization processing unit 13 when the virtualization processing unit 13 performs HRTF processing using the general HRTF coefficient. In other words, the general high-frequency band information is high-frequency band information for expanding a band of the HRTF output signal obtained by performing the HRTF processing using the general HRTF coefficient.

The rendering processing unit 12 performs rendering processing such as VBAP on the basis of the object position information and the object signal supplied from the decoding processing unit 11 and supplies a virtual speaker signal obtained as a result to the virtualization processing unit 13.

The virtualization processing unit 13 performs HRTF processing as virtualization processing on the basis of the virtual speaker signal supplied from the rendering processing unit 12, and the personal HRTF coefficient that corresponds to a transmission function given in advance and is supplied from the HRTF coefficient recording unit 122, and supplies an audio signal obtained as a result to the band expanding unit 41.

In the HRTF processing, convolution processing of the virtual speaker signal for each virtual speaker and the personal HRTF coefficient and addition processing of adding signals obtained through the convolution processing for each of the virtual speakers are performed, for example.

Note that the audio signal obtained by the virtualization processing unit 13 through the HRTF processing will also be referred to as an HRTF output signal below, in particular. The HRTF output signal is a drive signal that is obtained by performing signal processing such as rendering processing and virtualization processing on the object signal to output sound by driving a replaying device such as a headphone.

In the signal processing device 101, the object signal supplied from the decoding processing unit 11 to the rendering processing unit 12 is, for example, a low FS object signal at a sampling frequency of 48 kHz.

In such a case, the virtual speaker signal supplied from the rendering processing unit 12 to the virtualization processing unit 13 is also a signal at a sampling frequency of 48 kHz, the sampling frequency of the HRTF output signal supplied from the virtualization processing unit 13 to the band expanding unit 41 is also 48 kHz.

In the signal processing device 101, the rendering processing unit 12 and the virtualization processing unit 13 can function as signal processing units that perform signal processing including rendering processing and virtualization processing on the basis of the meta data (object position information), the personal HRTF coefficient, and the object signal and generate the HRTF output signal. In this case, it is only necessary for the signal processing to include at least virtualization processing.

The personal high-frequency band information generation unit 121 generates personal high-frequency band information on the basis of the general high-frequency band information supplied from the decoding processing unit 11 and the general HRTF coefficient and the personal HRTF coefficient supplied from the HRTF coefficient recording unit 122 and supplies the personal high-frequency band information to the band expanding unit 41.

The personal high-frequency band information is high-frequency band information for expanding a band of the HRTF output signal obtained by performing HRTF processing using the personal HRTF coefficient.

The HRTF coefficient recording unit 122 records (holds) the general HRTF coefficient and the personal HRTF coefficient recorded in advance or acquired from an external device as needed.

The HRTF coefficient recording unit 122 supplies the recorded personal HRTF coefficient to the virtualization processing unit 13 and supplies the recorded general HRTF coefficient and personal HRTF coefficient to the personal high-frequency band information generation unit 121.

Since the general HRTF coefficient is generally stored in advance in a recording region of the replaying device, it is possible to record the general HRTF coefficient in advance in the HRTF coefficient recording unit 122 of the signal processing device 101 that functions as the replaying device in this example as well.

Also, the personal HRTF coefficient can be acquired from a server or the like on the network.

In such a case, the signal processing device 101 itself that functions as the replaying device or a terminal device such as a smartphone connected to the signal processing device 101, for example, generates image data such as a face image or an ear image of a user through imaging.

Then, the signal processing device 101 transmits the image data obtained in regard to the user to the server, and the server performs conversion processing on the held HRTF coefficient on the basis of the image data received from the signal processing device 101, thereby generates the personal HRTF coefficient for each of individual users, and transmits the personal HRTF coefficient to the signal processing device 101. The HRTF coefficient recording unit 122 acquires and records the personal HRTF coefficient transmitted from the server and received by the signal processing device 101 in this manner.

The band expanding unit 41 performs band expansion processing on the HRTF output signal supplied from the virtualization processing unit 13 on the basis of the personal high-frequency band information supplied from the personal high-frequency band information generation unit 121, thereby generates an output audio signal, and outputs the output audio signal to a later stage. The output audio signal obtained by the band expanding unit 41 is a signal at a sampling frequency of 96 kHz, for example.

<Configuration example of personal high-frequency band information generation unit>

As described above, the personal high-frequency band information generation unit 121 generates personal high-frequency band information on the basis of general high-frequency band information, a general HRTF coefficient, and a personal HRTF coefficient.

Although personal high-frequency band information is supposed to be multiplexed in an input bit stream, a personal input bit stream for each user has to be held on a server in that case, which is not preferable in terms of the storage capacity of the server.

Therefore, according to the present technology, general high-frequency band information is multiplexed in the input bit stream, and personal high-frequency band information is generated using the personal HRTF coefficient and the general HRTF coefficient acquired by the personal high-frequency band information generation unit 121 by some method.

Although the generation of the personal high-frequency band information in the personal high-frequency band information generation unit 121 may be realized by any method, it is possible to realize it using a deep learning technology such as deep neural network (DNN), for example, in one example.

Here, a case in which the personal high-frequency band information generation unit 121 is configured of a DNN will be described as an example.

For example, the personal high-frequency band information generation unit 121 generates personal high-frequency band information by performing an arithmetic operation based on the DNN (neural network) on the basis of a coefficient configuring the DNN generated through machine learning in advance and general high-frequency band information, a general HRTF coefficient, and a personal HRTF coefficient as inputs of the DNN.

In such a case, the personal high-frequency band information generation unit 121 is configured as illustrated in Fig. 8, for example.

The personal high-frequency band information generation unit 121 includes a multi-layer perceptron (MLP) 151, a MLP 152, a recurrent neural network (RNN) 153, a feature amount synthesizing unit 154, and an MLP 155.

The MLP 151 is an MLP configured of three or more layers of nodes that are nonlinearly activated, that is, an input layer, an output layer, and one or more hidden layers. The MLP is one of technologies that are generally used in the DNN.

The MLP 151 generates (calculates) a vector gh_out that is data indicating some feature of the general HRTF coefficient by regarding the general HRTF coefficient supplied from the HRTF coefficient recording unit 122 as a vector gh_in used as an input of the MLP and performing an arithmetic operation based on the vector gh_in and supplies the vector gh_out to the feature amount synthesizing unit 154.

Note that the vector gh_in used as an input of the MLP may be the general HRTF coefficient itself or may be the feature amount obtained by performing some pre-processing on the general HRTF coefficient in order to reduce a calculation resource in a later stage.

The MLP 152 is an MLP that is similar to the MLP 151, generates a vector ph_out that is data indicating some feature of the personal HRTF coefficient by regarding the personal HRTF coefficient supplied from the HRTF coefficient recording unit 122 as a vector ph_in used as an input of the MLP and performing an arithmetic operation based on the vector ph_in and supplies the vector ph_out to the feature amount synthesizing unit 154.

Note that the vector ph_in may also be the personal HRTF coefficient itself or may be a feature amount obtained by performing some pre-processing on the personal HRTF coefficient.

The RNN 153 is generally an RNN configured of three layers, namely an input layer, a hidden layer, and an output layer, for example. The RNN is adapted such that an output of the hidden layer is fed back to an input of the hidden layer, and the RNN has a neural network structure suitable for time-series data.

Note that although an example in which the RNN is used to generate personal high-frequency band information will be described here, the present technology does not depend on the configuration of the DNN as the personal high-frequency band information generation unit 121, and a long short term memory (LSTM) that is a neural network structure suitable for longer-term time-series data, for example, may be used instead of the RNN.

The RNN 153 generates (calculates) a vector ge_out(n) that is data indicating some feature of general high-frequency band information by regarding the general high-frequency band information supplied from the decoding processing unit 11 as a vector ge_in(n) as an input and performing an arithmetic operation based on the vector ge_in(n) and supplies the vector ge_out(n) to the feature amount synthesizing unit 154.

Note that n in the vector ge_in(n) and the vector ge_out(n) represents an index of a time frame of an object signal. Particularly, the RNN 153 uses vectors ge_in(n) corresponding to a plurality of frames to generate personal high-frequency band information for one frame.

The feature amount synthesizing unit 154 performs vector concatenation of the vector gh_out supplied from the MLP 151, the vector ph_out supplied from the MLP 152, and the vector ge_out(n) supplied from the RNN 153, thereby generates one vector co_out(n), and supplies the vector co_out(n) to the MLP 155.

Note that although vector concatenation is used here as a method for synthesizing the feature amount in the feature amount synthesizing unit 154, the present technology is not limited thereto, and the vector co_out(n) may be generated by any other method. For example, the feature amount synthesizing unit 154 may perform feature amount synthesis by a method called max-pooling such that a vector is synthesized into a compact size with which the feature can be sufficiently expressed.

The MLP 155 is an MLP including an input layer, an output layer, and one or more hidden layers, for example, performs an arithmetic operation based on the vector co_out(n) supplied from the feature amount synthesizing unit 154, and supplies a vector pe_out(n) obtained as a result as personal high-frequency band information to the band expanding unit 41.

The coefficients configuring the MLPs and the RNN such as the MLP 151, the MLP 152, the RNN 153, and the MLP 155 configuring the DNN that functions as the personal high-frequency band information generation unit 121 as described above can be obtained by performing machine learning using training data in advance.

<Syntax example of input bit stream>

The signal processing device 101 needs general high-frequency band information in order to generate personal high-frequency band information, and an input bit stream stores the general high-frequency band information.

Here, a syntax example of the input bit stream supplied to the decoding processing unit 11, that is, a format example of the input bit stream is illustrated in Fig. 9.

In Fig. 9, "num_objects" denotes the total number of objects, and "object_compressed_data" denotes a coded (compressed) object signal.

Also, "position_azimuth" denotes a horizontal angle in a spherical coordinate system of an object, "position_elevation" denotes a vertical angle in the spherical coordinate system of the object, and "position_radius" denotes a distance (radius) from the origin of the spherical coordinate system to the object. Here, information including the horizontal angle, the vertical angle, and the distance is the object position information indicating the position of the object.

Therefore, in this example, the coded object signals and the object position information corresponding to the number of objects indicated by "num_objects" are included in the input bit stream.

Also, in Fig. 9, "num_output" denotes the number of output channels, that is, the number of channels of the HRTF output signal, and "output_bwe_data" denotes general high-frequency band information. Therefore, the general high-frequency band information is stored for each channel of the HRTF output signal in this example.

<Explanation of signal generation processing>

Next, operations in the signal processing device 101 will be described. In other words, signal generation processing performed by the signal processing device 101 will be described below with reference to the flowchart in Fig. 10.

In Step S11, the decoding processing unit 11 performs demultiplexing and decoding processing on the supplied input bit stream, supplies general high-frequency band information obtained as a result to the personal high-frequency band information generation unit 121, and supplies the object position information and the object signal to the rendering processing unit 12.

Here, the general high-frequency band information indicated by "output_bwe_data" illustrated in Fig. 9, for example, is extracted from an input bit stream and is then supplied to the personal high-frequency band information generation unit 121.

In Step S12, the rendering processing unit 12 performs rendering processing on the basis of the object position information and the object signal supplied from the decoding processing unit 11 and supplies a virtual speaker signal obtained as a result to the virtualization processing unit 13. In Step S12, for example, rendering processing such as VBAP is performed.

In Step S13, the virtualization processing unit 13 performs virtualization processing. In Step S13, for example, HRTF processing is performed as virtualization processing.

In this case, the virtualization processing unit 13 performs as HRTF processing, processing of convolving the virtual speaker signal for each virtual speaker supplied from the rendering processing unit 12 and the personal HRTF coefficient of each virtual speaker for each channel supplied from the HRTF coefficient recording unit 122 and adding signals obtained as a result for each channel. The virtualization processing unit 13 supplies an HRTF output signal obtained through the HRTF processing to the band expanding unit 41.

In Step S14, the personal high-frequency band information generation unit 121 generates personal high-frequency band information on the basis of the general high-frequency band information supplied from the decoding processing unit 11 and the general HRTF coefficient and the personal HRTF coefficient supplied from the HRTF coefficient recording unit 122 and supplies the personal high-frequency band information to the band expanding unit 41.

In Step S14, for example, the MLPs 151 to 155 of the personal high-frequency band information generation unit 121 configuring the DNN generate the personal high-frequency band information.

Specifically, the MLP 151 performs an arithmetic operation on the basis of the general HRTF coefficient, that is, a vector gh_in supplied from the HRTF coefficient recording unit 122 and supplies a vector gh_out obtained as a result to the feature amount synthesizing unit 154.

The MLP 152 performs an arithmetic operation on the basis of the personal HRTF coefficient, that is, a vector ph_in supplied from the HRTF coefficient recording unit 122 and supplies a vector ph_out obtained as a result to the feature amount synthesizing unit 154.

The RNN 153 performs an arithmetic operation on the basis of the general high-frequency band information, that is a vector ge_in(n) supplied from the decoding processing unit 11 and supplies a vector ge_out(n) obtained as a result to the feature amount synthesizing unit 154.

Additionally, the feature amount synthesizing unit 154 performs vector concatenation of the vector gh_out supplied from the MLP 151, the vector ph_out supplied from the MLP 152, and the vector ge_out(n) supplied from the RNN 153 and supplies a vector co_out(n) obtained as a result to the MLP 155.

The MLP 155 performs an arithmetic operation on the basis of the vector co_out(n) supplied from the feature amount synthesizing unit 154 and supplies a vector pe_out(n) obtained as a result as personal high-frequency band information to the band expanding unit 41.

In Step S15, the band expanding unit 41 performs band expansion processing on the HRTF output signal supplied from the virtualization processing unit 13 on the basis of the personal high-frequency band information supplied from the personal high-frequency band information generation unit 121 and outputs an output audio signal obtained as a result to a later stage. Once the output audio signal is generated in this manner, the signal generation processing is ended.

As described above, the signal processing device 101 generates personal high-frequency band information using the general high-frequency band information extracted (read) from the input bit stream, performs band expansion processing using the personal high-frequency band information, and thereby generates an output audio signal.

In this case, it is possible to reduce a processing load, that is, the amount of arithmetic operation of the signal processing device 101 by performing the band expansion processing on the HRTF output signal at a low sampling frequency obtained by performing the rendering processing and the HRTF processing.

Furthermore, it is possible to obtain an output audio signal with high quality by generating the personal high-frequency band information corresponding to the personal HRTF coefficient used in the HRTF processing and performing the band expansion processing.

Therefore, it is possible to perform audio replaying with high quality even when the signal processing device 101 is an inexpensive device.

<Configuration example of learning device>

Next, the learning device that generates, as personal high-frequency band information generating coefficient data, coefficients configuring DNN (neural network) as the personal high-frequency band information generation unit 121, that is, coefficients configuring the MLP 151, the MLP 152, the RNN 153, and the MLP 155 will be described.

Such a learning device is configured as illustrated in Fig. 11, for example.

The learning device 201 includes a rendering processing unit 211, a personal HRTF processing unit 212, a personal high-frequency band information calculation unit 213, a general HRTF processing unit 214, a general high-frequency band information calculation unit 215, and a personal high-frequency band information learning unit 216.

The rendering processing unit 211 performs rendering processing that is similar to that in the case of the rendering processing unit 12 on the basis of the supplied object position information and object signal and supplies a virtual speaker signal obtained as a result to the personal HRTF processing unit 212 and the general HRTF processing unit 214.

Note that since the personal high-frequency band information is needed as training data in a later stage of the rendering processing unit 211, it is necessary for the virtual speaker signal that is an output of the rendering processing unit 211, that is, an object signal that is an input of the rendering processing unit 211 to include high-frequency band information.

If it is assumed that the HRTF output signal that is an output of the virtualization processing unit 13 of the signal processing device 101 is a signal at a sampling frequency of 48 kHz, for example, the sampling frequency of the object signal input to the rendering processing unit 211 is 96 kHz or the like.

In this case, the rendering processing unit 211 performs rendering processing such as VBAP at a sampling frequency of 96 kHz and generates a virtual speaker signal at a sampling frequency of 96 kHz.

Note that although the following description will be given on the assumption that the HRTF output signal that is an output of the virtualization processing unit 13 is a signal at a sampling frequency of 48 kHz, the sampling frequency of each signal in the present technology is not limited to the example. For example, the sampling frequency of the HRTF output signal may be 44.1 kHz, and the sampling frequency of the object signal input to the rendering processing unit 211 may be 88.2 kHz.

The personal HRTF processing unit 212 performs HRTF processing (hereinafter, also referred to as personal HRTF processing, in particular) on the basis of the supplied personal HRTF coefficient and the virtual speaker signal supplied from the rendering processing unit 211 and supplies a personal HRTF output signal obtained as a result to the personal high-frequency band information calculation unit 213. The personal HRTF output signal obtained through the personal HRTF processing is a signal at a sampling frequency of 96 kHz.

In this example, the rendering processing unit 211 and the personal HRTF processing unit 212 can function as one signal processing unit that performs signal processing including rendering processing and virtualization processing (personal HRTF processing) on the basis of meta data (object position information), a personal HRTF coefficient, and an object signal and generates a personal HRTF output signal. In this case, it is only necessary for the signal processing to include at least virtualization processing.

The personal high-frequency band information calculation unit 213 generates (calculates) personal high-frequency band information on the basis of the personal HRTF output signal supplied from the personal HRTF processing unit 212 and supplies the obtained personal high-frequency band information as training data at the time of learning to the personal high-frequency band information learning unit 216.

For example, the personal high-frequency band information calculation unit 213 obtains, as personal high-frequency band information, an average amplitude value of each high-frequency sub-band of the personal HRTF output signal as described above with reference to Fig. 5.

In other words, it is possible to obtain personal high-frequency band information by generating a high-frequency sub-band signal of each high-frequency sub-band by applying a band pass filter bank to the personal HRTF output signal at the sampling frequency of 96 kHz and calculating an average amplitude value of a time frame of the high-frequency sub-band signal.

The general HRTF processing unit 214 performs HRTF processing (hereinafter, also referred to as general HRTF processing, in particular) on the basis of the supplied general HRTF coefficient and the virtual speaker signal supplied from the rendering processing unit 211 and supplies a general HRTF output signal obtained as a result to the general high-frequency band information calculation unit 215. The general HRTF output signal is a signal at a sampling frequency of 96 kHz.

In this example, the rendering processing unit 211 and the general HRTF processing unit 214 can function as one signal processing unit that performs signal processing including rendering processing and virtualization processing (general HRTF processing) on the basis of meta data (object position information), a general HRTF coefficient, and an object signal and generates a general HRTF output signal. In this case, it is only necessary for the signal processing to include at least virtualization processing.

The general high-frequency band information calculation unit 215 generates (calculates) general high-frequency band information on the basis of the general HRTF output signal supplied from the general HRTF processing unit 214 and supplies it to the personal high-frequency band information learning unit 216. The general high-frequency band information calculation unit 215 performs calculation that is similar to that in the case of the personal high-frequency band information calculation unit 213 and generates general high-frequency band information.

An input bit stream includes, as "output_bwe_data" illustrated in Fig. 9, one that is similar to that in the general high-frequency band information obtained by the general high-frequency band information calculation unit 215.

Note that the processing performed by the general HRTF processing unit 214 and the general high-frequency band information calculation unit 215 is regarded as a pair with the processing performed by the personal HRTF processing unit 212 and the personal high-frequency band information calculation unit 213, and the processing is basically the same processing.

The processing is different only in that an input of the personal HRTF processing unit 212 is the personal HRTF coefficient while an input of the general HRTF processing unit 214 is a general HRTF coefficient. In other words, only HRTF coefficients to be input are different therebetween.

The personal high-frequency band information learning unit 216 performs learning (machine learning) on the basis of the supplied general HRTF coefficient and personal HRTF coefficient, the personal high-frequency band information supplied from the personal high-frequency band information calculation unit 213, and the general high-frequency band information supplied from the general high-frequency band information calculation unit 215 and outputs personal high-frequency band information generating coefficient data obtained as a result.

In particular, the personal high-frequency band information learning unit 216 performs machine learning using the personal high-frequency band information as training data and generates the personal high-frequency band information generating coefficient data for generating personal high-frequency band information from the general HRTF coefficient, the personal HRTF coefficient, and the general high-frequency band information.

It is possible to generate the personal high-frequency band information based on the learning result if each coefficient configuring the thus obtained personal high-frequency band information generating coefficient data is used by the MLP 151, the MLP 152, the RNN 153, and the MLP 155 of the personal high-frequency band information generation unit 121 in Fig. 8.

The learning processing performed by the personal high-frequency band information learning unit 216, for example, is performed by evaluating an error between a vector pe_out(n) output as a processing result of the personal high-frequency band information generation unit 121 and a vector tpe_out(n) that is personal high-frequency band information as training data. In other words, learning is performed such that the error between the vector pe_out(n) and the vector tpe_out(n) is minimized.

An initial value of a weight coefficient of each element such as the MLP 151 configuring the DNN is typically random, and various methods based on an error backpropagation method such as back propagation through time (BPTT) can be applied to a method for adjusting each coefficient in accordance with error evaluation.

<Explanation of learning processing>

Next, operations of the learning device 201 will be described. In other words, learning processing performed by the learning device 201 will be described with reference to the flowchart in Fig. 12.

In Step S41, the rendering processing unit 211 performs rendering processing on the basis of supplied object position information and object signal and supplies a virtual speaker signal obtained as a result to the personal HRTF processing unit 212 and the general HRTF processing unit 214.

In Step S42, the personal HRTF processing unit 212 performs personal HRTF processing on the basis of a supplied personal HRTF coefficient and the virtual speaker signal supplied from the rendering processing unit 211 and supplies a personal HRTF output signal obtained as a result to the personal high-frequency band information calculation unit 213.

In Step S43, the personal high-frequency band information calculation unit 213 calculates personal high-frequency band information on the basis of the personal HRTF output signal supplied from the personal HRTF processing unit 212 and supplies the thus obtained personal high-frequency band information as training data to the personal high-frequency band information learning unit 216.

In Step S44, the general HRTF processing unit 214 performs general HRTF processing on the basis of a supplied general HRTF coefficient and the virtual speaker signal supplied from the rendering processing unit 211 and supplies a general HRTF output signal obtained as a result to the general high-frequency band information calculation unit 215.

In Step S45, the general high-frequency band information calculation unit 215 calculates general high-frequency band information on the basis of the general HRTF output signal supplied from the general HRTF processing unit 214 and supplies the result to the personal high-frequency band information learning unit 216.

In Step S46, the personal high-frequency band information learning unit 216 performs learning on the basis of the supplied general HRTF coefficient and personal HRTF coefficient, the personal high-frequency band information supplied from the personal high-frequency band information calculation unit 213, and the general high-frequency band information supplied from the general high-frequency band information calculation unit 215 and generates personal high-frequency band information generating coefficient data.

At the time of the learning, personal high-frequency band information generating coefficient data for realizing DNN using the general high-frequency band information, the general HRTF coefficient, and the personal HRTF coefficient as inputs and the personal high-frequency band information that is training data as an output is generated. Once the personal high-frequency band information generating coefficient data is generated in this manner, the learning processing is ended.

As described above, the learning device 201 performs learning on the basis of the general HRTF coefficient, the personal HRTF coefficient, and the object signal and generates the personal high-frequency band information generating coefficient data.

The personal high-frequency band information generation unit 121 can thus obtain, from prediction, more appropriate personal high-frequency band information corresponding to the personal HRTF coefficient from the input general high-frequency band information, general HRTF coefficient, and personal HRTF coefficient.

<Configuration example of encoder>

Next, the encoder (coding device) that generates the input bit stream of the format illustrated in Fig. 9 will be described. Such an encoder is configured as illustrated in Fig. 13, for example.

The encoder 301 illustrated in Fig. 13 includes an object position information coding unit 311, a down-sampler 312, an object signal coding unit 313, a rendering processing unit 314, a general HRTF processing unit 315, a general high-frequency band information calculation unit 316, and a multiplexing unit 317.

An object signal of an object that is a coding target and object position information indicating the position of the object are input (supplied) to the encoder 301.

Here, the object signal input to the encoder 301 is, for example, a signal (FS96K object signal) at a sampling frequency of 96 kHz.

The object position information coding unit 311 codes the input object position information and supplies it to the multiplexing unit 317.

In this manner, coded object position information (object position data) including a horizontal angle "position_azimuth", a vertical angle "position_elevation", and a radius "position_radius" illustrated in Fig. 9, for example, is obtained as the coded object information.

The down-sampler 312 performs down-sampling processing, that is, band restriction on the input object signal at the sampling frequency of 96 kHz and supplies an object signal (FS48K object signal) at a sampling frequency of 48 kHz obtained as a result to the object signal coding unit 313.

The object signal coding unit 313 codes the object signal at 48 kHz supplied from the down-sampler 312 and supplies it to the multiplexing unit 317. In this manner, "object_compressed_data" illustrated in Fig. 9, for example, is obtained as the coded object signal.

Note that the coding scheme in the object signal coding unit 313 may be a coding scheme of the MPEG-H Part 3: 3D audio standard or may be another coding scheme. In other words, it is only necessary for the coding scheme in the object signal coding unit 313 and the decoding scheme in the decoding processing unit 11 to correspond to each other (based on the same standard).

The rendering processing unit 314 performs rendering processing such as VBAP on the basis of the input object position information and the object signal at 96 kHz and supplies a virtual speaker signal obtained as a result to the general HRTF processing unit 315.

Note that the rendering processing performed by the rendering processing unit 314 is not limited to VBAP and may be any other rendering processing as long as the processing is the same as that in a case of the rendering processing unit 12 of the signal processing device 101 on the decoding side (replaying side).

The general HRTF processing unit 315 performs HRTF processing using a general HRTF coefficient on the virtual speaker signal supplied from the rendering processing unit 314 and supplies a general HRTF output signal at 96 kHz obtained as a result to the general high-frequency band information calculation unit 316.

The general HRTF processing unit 315 performs processing similar to the general HRTF processing performed by the general HRTF processing unit 214 in Fig. 11.

The general high-frequency band information calculation unit 316 calculates general high-frequency band information on the basis of the general HRTF output signal supplied from the general HRTF processing unit 315, compression-codes the obtained general high-frequency band information, and supplies it to the multiplexing unit 317.

The general high-frequency band information generated by the general high-frequency band information calculation unit 316 is average amplitude information (average amplitude value) of each high-frequency sub-band illustrated in Fig. 5, for example.

For example, the general high-frequency band information calculation unit 316 performs filtering based on a band passing filter bank on the input general HRTF output signal at 96 kHz and obtains a high-frequency sub-band signal of each high-frequency sub-band. Then, the general high-frequency band information calculation unit 316 calculates an average amplitude value of a time frame of each high-frequency sub-band signal and thereby generates general high-frequency band information.

In this manner, "output_bwe_data" illustrated in Fig. 9, for example, is obtained as coded general high-frequency band information.

The multiplexing unit 317 multiplexes the coded object position information supplied from the object position information coding unit 311, the coded object signal supplied from the object signal coding unit 313, and the coded general high-frequency band information supplied from the general high-frequency band information calculation unit 316.

The multiplexing unit 317 outputs an output bit stream obtained by multiplexing the object position information, the object signal, and the general high-frequency band information. The output bit stream is input as an input bit stream to the signal processing device 101.

<Explanation of coding processing>

Next, operations of the encoder 301 will be described. In other words, coding processing performed by the encoder 301 will be described below with reference to the flowchart in Fig. 14.

In Step S71, the object position information coding unit 311 codes input object position information and supplies it to the multiplexing unit 317.

In Step S72, the down-sampler 312 down-samples an input object signal and supplies it to the object signal coding unit 313.

In Step S73, the object signal coding unit 313 codes the object signal supplied from the down-sampler 312 and supplies it to the multiplexing unit 317.

In Step S74, the rendering processing unit 314 performs rendering processing on the basis of the input object position information and object signal and supplies a virtual speaker signal obtained as a result to the general HRTF processing unit 315.

In Step S75, the general HRTF processing unit 315 performs HRTF processing using a general HRTF coefficient on the virtual speaker signal supplied from the rendering processing unit 314 and supplies a general HRTF output signal obtained as a result to the general high-frequency band information calculation unit 316.

In Step S76, the general high-frequency band information calculation unit 316 calculates general high-frequency band information on the basis of the general HRTF output signal supplied from the general HRTF processing unit 315, compression-codes the obtained general high-frequency band information, and supplies it to the multiplexing unit 317.

In Step S77, the multiplexing unit 317 multiplexes the coded object position information supplied from the object position information coding unit 311, the coded object signal supplied from the object signal coding unit 313, and the coded general high-frequency band information supplied from the general high-frequency band information calculation unit 316.

The multiplexing unit 317 outputs an output bit stream obtained through the multiplexing, and the coding processing is ended.

As described above, the encoder 301 calculates the general high-frequency band information and stores it in the output bit stream.

In this manner, it is possible to generate personal high-frequency band information using the general high-frequency band information on the decoding side of the output bit stream. In this manner, it is possible to perform audio replaying with high quality even with an inexpensive device on the decoding side.

Note that the example in which the HRTF output signal that is a target of band expansion is generated from the object signal of the audio object has been described above.

However, the present technology is not limited thereto, and an HRTF output signal may be generated from an audio signal of each channel of a channel base (hereinafter, also referred to as a channel signal), for example, and band expansion may be performed on the HRTF output signal.

In such a case, the signal processing device 101 is not provided with the rendering processing unit 12, and the input bit stream includes the coded channel signal.

Then, a channel signal of each channel with a multi-channel configuration obtained by the decoding processing unit 11 performing demultiplexing and decoding processing on the input bit stream is supplied to the virtualization processing unit 13. The channel signal of each channel corresponds to a virtual speaker signal of each virtual speaker.

The virtualization processing unit 13 performs, as HRTF processing, processing of convolving the channel signal supplied from the decoding processing unit 11 and the personal HRTF coefficient for each channel supplied from the HRTF coefficient recording unit 122 and adding signals obtained as a result. The virtualization processing unit 13 supplies the HRTF output signal obtained through such HRTF processing to the band expanding unit 41.

Also, in a case where the HRTF output signal is generated from a channel signal in the signal processing device 101, the learning device 201 is not provided with the rendering processing unit 211, and the channel signal at a high sampling frequency, that is, the channel signal including high-frequency band information is supplied to the personal HRTF processing unit 212 and the general HRTF processing unit 214.

Additionally, high order ambisonics (HOA) rendering processing may be performed by the rendering processing unit 12, for example.

In such a case, the rendering processing unit 12 performs rendering processing by an ambisonic format supplied from the decoding processing unit 11, that is, on the basis of an audio signal in a spherical harmonics domain, for example, thereby generates a virtual speaker signal in the spherical harmonics domain, and supplies it to the virtualization processing unit 13.

The virtualization processing unit 13 performs HRTF processing in the spherical harmonics domain on the basis of the virtual speaker signal in the spherical harmonics domain supplied from the rendering processing unit 12 and personal HRTF coefficient in the spherical harmonic region supplied from the HRTF coefficient recording unit 122 and supplies the HRTF output signal obtained as a result to the band expanding unit 41. At this time, an HRTF output signal in the spherical harmonic region may be supplied to the band expanding unit 41, or an HRTF output signal in a time region obtained by performing conversion or the like as needed may be supplied to the band expanding unit 41.

As described above, according to the present technology, it is possible to perform the band expansion processing using personal high-frequency band information for a signal after personal HRTF processing rather than high-frequency band information of an object signal on the decoding side (replaying side).

Furthermore, since there is no need to multiplex the personal high-frequency band information on the input bit stream in this case, it is possible to reduce the amount of consumption of a server or the like, that is, a storage of the encoder 301 and also to curb an increase in processing time for coding processing (encoding processing) in the encoder 301.

Also, the decoding processing, the rendering processing, and the virtualization processing are performed at a low sampling frequency on the side of the replaying device, that is, on the side of the signal processing device 101, and it is thus possible to significantly reduce the amount of arithmetic operation. In this manner, it is possible to employ an inexpensive processor, for example, to reduce the amount of power used by the processor, and to continuously replay a high-resolution sound source for a longer period of time with a mobile device such as a smartphone.

<Example of configuration of computer>

The aforementioned series of processing can also be performed by hardware or software. In the case where the series of processes are executed by software, a program that configures the software is installed on a computer. Here, the computer includes, for example, a computer built in dedicated hardware, a general-purpose personal computer on which various programs are installed to be able to execute various functions, and the like.

Fig. 15 is a block diagram illustrating a configuration example of computer hardware that executes the aforementioned series of processing using a program.

In the computer, a central processing unit (CPU) 501, a read only memory (ROM) 502, and a random access memory (RAM) 503 are connected to each other by a bus 504.

An input/output interface 505 is further connected to the bus 504. An input unit 506, an output unit 507, a recording unit 508, a communication unit 509, and a drive 510 are connected to the input/output interface 505.

The input unit 506 includes a keyboard, a mouse, a microphone, an imaging element, or the like. The output unit 507 includes a display, a speaker, or the like. The recording unit 508 includes a hard disk, a nonvolatile memory, or the like. The communication unit 509 includes a network interface or the like. The drive 510 drives a removable recording medium 511 such as a magnetic disk, an optical disc, a magneto-optical disk, or a semiconductor memory.

In the computer that has the aforementioned configuration, the CPU 501 loads a program stored in the recording unit 508 to the RAM 503 via the input/output interface 505 and the bus 504 and executes the program to perform the aforementioned series of processing, for example.

The program executed by the computer (the CPU 501) can be recorded on, for example, the removable recording medium 511 serving as a package medium for supply. The program can be provided via a wired or wireless transfer medium such as a local area network, the Internet, or digital satellite broadcasting.

In the computer, by mounting the removable recording medium 511 on the drive 510, it is possible to install the program in the recording unit 508 via the input/output interface 505. Furthermore, the program can be received by the communication unit 509 via a wired or wireless transfer medium to be installed in the recording unit 508. Alternatively, the program can be installed in advance in the ROM 502 or the recording unit 508.

Note that the program executed by a computer may be a program that performs processing chronologically in the order described in the present specification or may be a program that performs processing in parallel or at a necessary timing such as a called time.

Embodiments of the present technology are not limited to the above-described embodiments and can be changed variously within the scope of the present technology without departing from the gist of the present technology.

For example, the present technology may be configured as cloud computing in which a plurality of devices share and cooperatively process one function via a network.

In addition, each step described in the above flowchart can be executed by one device or executed in a shared manner by a plurality of devices.

Furthermore, in a case in which one step includes a plurality of processes, the plurality of processes included in the one step can be executed by one device or executed in a shared manner by a plurality of devices.

Furthermore, the present technology can be configured as follows.

(1) A signal processing device including: a decoding processing unit that demultiplexes an input bit stream into a first audio signal, meta data of the first audio signal, and first high-frequency band information for expanding a band; and a band expanding unit that performs band expansion processing on the basis of a second audio signal and second high-frequency band information and thereby generates an output audio signal, the second audio signal being obtained by performing signal processing on the basis of the first audio signal and the meta data, the second high-frequency band information being generated on the basis of the first high-frequency band information.

(2) The signal processing device according to (1), further including: a high-frequency band information generation unit that generates the second high-frequency band information on the basis of the first high-frequency band information.

(3) The signal processing device according to (2), in which the first high-frequency band information is high-frequency band information for expanding a band of the second audio signal obtained by performing the signal processing using a first coefficient, the second high-frequency band information is high-frequency band information for expanding a band of the second audio signal obtained by performing the signal processing using a second coefficient, and the band expanding unit performs the band expansion processing on the basis of the second audio signal and the second high-frequency band information, the second audio signal being obtained by performing the signal processing on the basis of the first audio signal, the meta data, and the second coefficient.

(4) The signal processing device according to (3), in which the high-frequency band information generation unit generates the second high-frequency band information on the basis of the first high-frequency band information, the first coefficient, and the second coefficient.

(5) The signal processing device according to (3) or (4), in which the high-frequency band information generation unit generates the second high-frequency band information by performing an arithmetic operation based on a coefficient generated in advance through machine learning, the first high-frequency band information, the first coefficient, and the second coefficient.

(6) The signal processing device according to (5), in which the arithmetic operation is an arithmetic operation based on a neural network.

(7) The signal processing device according to any one of (3) to (6), in which the first coefficient is a general coefficient while the second coefficient is a coefficient for each user.

(8) The signal processing device according to (7), in which the first coefficient and the second coefficient are HRTF coefficients.

(9) The signal processing device according to any one of (3) to (8), further including: a coefficient recording unit that records the first coefficient.

(10) The signal processing device according to any one of claims (1) to (9), further including: a signal processing unit that generates the second audio signal by performing the signal processing.

(11) The signal processing device according to (10), in which the signal processing is processing including virtualization processing.

(12) The signal processing device according to (11), in which the signal processing is processing including rendering processing.

(13) The signal processing device according to any one of (1) to (12), in which the first audio signal is an object signal of an audio object or an audio signal of a channel base.

(14) A signal processing method including, by a signal processing device:

demultiplexing an input bit stream into a first audio signal, meta data of the first audio signal, and first high-frequency band information for expanding a band;

and performing band expansion processing on the basis of a second audio signal and second high-frequency band information and thereby generating an output audio signal, the second audio signal being obtained by performing signal processing on the basis of the first audio signal and the meta data, the second high-frequency band information being generated on the basis of the first high-frequency band information.

(15) A program that causes a computer to execute processing including steps of:

demultiplexing an input bit stream into a first audio signal, meta data of the first audio signal, and first high-frequency band information for expanding a band;

and performing band expansion processing on the basis of a second audio signal and second high-frequency band information and thereby generating an output audio signal, the second audio signal being obtained by performing signal processing on the basis of the first audio signal and the meta data, the second high-frequency band information being generated on the basis of the first high-frequency band information.

(16) A learning device including: a first high-frequency band information calculation unit that generates first high-frequency band information for expanding a band on the basis of a second audio signal generated by signal processing based on a first audio signal and a first coefficient; a second high-frequency band information calculation unit that generates second high-frequency band information for expanding a band on the basis of a third audio signal generated by the signal processing based on the first audio signal and a second coefficient; and a high-frequency band information learning unit that performs learning using the second high-frequency band information as training data on the basis of the first coefficient, the second coefficient, the first high-frequency band information, and the second high-frequency band information and generates coefficient data for obtaining the second high-frequency band information from the first coefficient, the second coefficient, and the first high-frequency band information.

(17) The learning device according to (16), in which the coefficient data is coefficients configuring a neural network.

(18) The learning device according to (16) or (17), in which the first coefficient is a general coefficient while the second coefficient is a coefficient for each user.

(19) The learning device according to (18), in which the signal processing is processing including virtualization processing, and the first coefficient and the second coefficient are HRTF coefficients.

(20) The learning device according to (19), in which the signal processing is processing including rendering processing.

(21) The learning device according to any one of (16) to (19), in which the first audio signal is an object signal of an audio object or an audio signal of a channel base.

(22) A learning method including, by a learning device: generating first high-frequency band information for expanding a band on the basis of a second audio signal generated by signal processing based on a first audio signal and a first coefficient; generating second high-frequency band information for expanding a band on the basis of a third audio signal generated by the signal processing based on the first audio signal and a second coefficient; and performing learning using the second high-frequency band information as training data on the basis of the first coefficient, the second coefficient, the first high-frequency band information, and the second high-frequency band information and thereby generating coefficient data for obtaining the second high-frequency band information from the first coefficient, the second coefficient, and the first high-frequency band information.

(23) A program that causes a computer to execute processing including steps of:

generating first high-frequency band information for expanding a band on the basis of a second audio signal generated by signal processing based on a first audio signal and a first coefficient; generating second high-frequency band information for expanding a band on the basis of a third audio signal generated by the signal processing based on the first audio signal and a second coefficient;

and performing learning using the second high-frequency band information as training data on the basis of the first coefficient, the second coefficient, the first high-frequency band information, and the second high-frequency band information and thereby generating coefficient data for obtaining the second high-frequency band information from the first coefficient, the second coefficient,

and the first high-frequency band information.

[Reference Signs List]

| 11 | Decoding processing unit |
| 12 | Rendering processing unit |
| 13 | Virtualization processing unit |
| 41 | Band expanding unit |
| 101 | Signal processing device |
| 121 | Personal high-frequency band information generation unit |

**Claims**

1. A signal processing device comprising:

a decoding processing unit that demultiplexes an input bit stream into a first audio signal, meta data of the first audio signal, and first high-frequency band information for expanding a band; and
a band expanding unit that performs band expansion processing on the basis of a second audio signal and second high-frequency band information and thereby generates an output audio signal, the second audio signal being obtained by performing signal processing on the basis of the first audio signal and the meta data, the second high-frequency band information being generated on the basis of the first high-frequency band information.

2. The signal processing device according to claim 1, further comprising:
a high-frequency band information generation unit that generates the second high-frequency band information on the basis of the first high-frequency band information.

3. The signal processing device according to claim 2,

wherein the first high-frequency band information is high-frequency band information for expanding a band of the second audio signal obtained by performing the signal processing using a first coefficient,
the second high-frequency band information is high-frequency band information for expanding a band of the second audio signal obtained by performing the signal processing using a second coefficient, and
the band expanding unit performs the band expansion processing on the basis of the second audio signal and the second high-frequency band information, the second audio signal being obtained by performing the signal processing on the basis of the first audio signal, the meta data, and the second coefficient.

4. The signal processing device according to claim 3, wherein the high-frequency band information generation unit generates the second high-frequency band information on the basis of the first high-frequency band information, the first coefficient, and the second coefficient.

5. The signal processing device according to claim 3, wherein the high-frequency band information generation unit generates the second high-frequency band information by performing an arithmetic operation based on a coefficient generated in advance through machine learning, the first high-frequency band information, the first coefficient, and the second coefficient.

**6.** The signal processing device according to claim 5, wherein the arithmetic operation is an arithmetic operation based on a neural network.

**7.** The signal processing device according to claim 3, wherein the first coefficient is a general coefficient while the second coefficient is a coefficient for each user.

**8.** The signal processing device according to claim 7, wherein the first coefficient and the second coefficient are HRTF coefficients.

**9.** The signal processing device according to claim 1, further comprising:
a signal processing unit that generates the second audio signal by performing the signal processing.

**10.** The signal processing device according to claim 9, wherein the signal processing is processing including virtualization processing or rendering processing.

**11.** The signal processing device according to claim 1, wherein the first audio signal is an object signal of an audio object or an audio signal of a channel base.

**12.** A signal processing method comprising, by a signal processing device:

demultiplexing an input bit stream into a first audio signal, meta data of the first audio signal, and first high-frequency band information for expanding a band; and

performing band expansion processing on the basis of a second audio signal and second high-frequency band information and thereby generating an output audio signal, the second audio signal being obtained by performing signal processing on the basis of the first audio signal and the meta data, the second high-frequency band information being generated on the basis of the first high-frequency band information.

**13.** A program that causes a computer to perform processing including steps of:

demultiplexing an input bit stream into a first audio signal, meta data of the first audio signal, and first high-frequency band information for expanding a band;
and

performing band expansion processing on the basis of a second audio signal and second high-frequency band information and thereby generating an output audio signal, the second audio signal being obtained by performing signal processing on the basis of the first audio signal and the meta data, the second high-frequency band information being generated on the basis of the first high-frequency band information.

**14.** A learning device comprising:

a first high-frequency band information calculation unit that generates first high-frequency band information for expanding a band on the basis of a second audio signal generated by signal processing based on a first audio signal and a first coefficient;
a second high-frequency band information calculation unit that generates second high-frequency band information for expanding a band on the basis of a third audio signal generated by the signal processing based on the first audio signal and a second coefficient; and
a high-frequency band information learning unit that performs learning using the second high-frequency band information as training data on the basis of the first coefficient, the second coefficient, the first high-frequency band information,
and the second high-frequency band information and generates coefficient data for obtaining the second high-frequency band information from the first coefficient, the second coefficient, and the first high-frequency band information.

**15.** The learning device according to claim 14, wherein the coefficient data is coefficients configuring a neural network.

**16.** The learning device according to claim 14, wherein the first coefficient is a general coefficient while the second coefficient is a coefficient for each user.

**17.** The learning device according to claim 16,

wherein the signal processing is processing including virtualization processing or rendering processing, and the first coefficient and the second coefficient are HRTF coefficients.

**18.** The learning device according to claim 14, wherein the first audio signal is an object signal of an audio object or an audio signal of a channel base.

**19.** A learning method comprising, by a learning device:

generating first high-frequency band information for expanding a band on the basis of a second audio signal generated by signal processing based on a first audio signal and a first coefficient;
generating second high-frequency band information for expanding a band on the basis of a third audio signal generated by the signal processing based on the first audio signal and a second coefficient; and
performing learning using the second high-frequency band information as training data on the basis of the first coefficient, the second coefficient, the first high-frequency band information, and the second high-frequency band information and thereby generating coefficient data for obtaining the second high-frequency band information from the first coefficient, the second coefficient, and the first high-frequency band information.

**20.** A program for causing a computer to execute processing comprising steps of:

generating first high-frequency band information for expanding a band on the basis of a second audio signal generated by signal processing based on a first audio signal and a first coefficient;
generating second high-frequency band information for expanding a band on the basis of a third audio signal generated by the signal processing based on the first audio signal and a second coefficient; and
performing learning using the second high-frequency band information as training data on the basis of the first coefficient, the second coefficient, the first high-frequency band information, and the second high-frequency band information and thereby generating coefficient data for obtaining the second high-frequency band information from the first coefficient, the second coefficient, and the first high-frequency band information.

Fig. 1

Fig. 2

Fig. 3

Fig. 4

Fig. 5

Fig. 6

Fig. 7

EP 4 210 048 A1

Fig. 8

121 PERSONAL HIGH-FREQUENCY BAND INFORMATION GENERATION UNIT

GENERAL HRTF COEFFICIENT gh_in → 151 MLP → gh_out

PERSONAL HRTF COEFFICIENT ph_in → 152 MLP → ph_out

GENERAL HIGH-FREQUENCY BAND INFORMATION ge_in(n) → 153 RNN → ge_out(n)

154 FEATURE AMOUNT SYNTHESIZING UNIT → co_out(n) → 155 MLP → pe_out(n) PERSONAL HIGH-FREQUENCY BAND INFORMATION

Fig. 9

EP 4 210 048 A1

| Syntax | No. of bits | Mnemonic |
|---|---|---|
| for ( i=0; i < num_objects; i++) {<br>　　object_compressed_data(i)<br>}<br>for ( i=0; i < num_objects; i++) {<br>　　position_azimuth[i];<br>　　position_elevation[i];<br>　　position_radius[i];<br>}<br>for(i = 0; i < num_output; i++){<br>　　output_bwe_data(i)<br>} | <br><br><br><br>8<br>6<br>4 | <br><br><br><br>tcimsbf<br>tcimsbf<br>uimsbf |

Fig. 10

```
        ┌──────────────────────────────┐
        │       START SIGNAL           │
        │   GENERATION PROCESSING      │
        └──────────────────────────────┘
                       │
                       ▼
        ┌──────────────────────────────┐
        │  PERFORM DECODING PROCESSING │  S11
        └──────────────────────────────┘
                       │
                       ▼
        ┌──────────────────────────────┐
        │  PERFORM RENDERING PROCESSING│  S12
        └──────────────────────────────┘
                       │
                       ▼
        ┌──────────────────────────────┐
        │    PERFORM VIRTUALIZATION     │  S13
        │        PROCESSING            │
        └──────────────────────────────┘
                       │
                       ▼
        ┌──────────────────────────────┐
        │      GENERATE PERSONAL        │  S14
        │ HIGH-FREQUENCY BAND INFORMATION│
        └──────────────────────────────┘
                       │
                       ▼
        ┌──────────────────────────────┐
        │   PERFORM BAND EXPANDING      │  S15
        │        PROCESSING            │
        └──────────────────────────────┘
                       │
                       ▼
              ┌─────────────┐
              │     END     │
              └─────────────┘
```

Fig. 11

201 LEARNING DEVICE

GENERAL HRTF COEFFICIENT

OBJECT POSITION INFORMATION

OBJECT SIGNAL

PERSONAL HRTF COEFFICIENT

211 RENDERING PROCESSING UNIT

VIRTUAL SPEAKER SIGNAL

214 GENERAL HRTF PROCESSING UNIT

GENERAL HRTF OUTPUT SIGNAL

215 GENERAL HIGH-FREQUENCY BAND INFORMATION CALCULATION UNIT

GENERAL HIGH-FREQUENCY BAND INFORMATION

212 PERSONAL HRTF PROCESSING UNIT

PERSONAL HRTF OUTPUT SIGNAL

213 PERSONAL HIGH-FREQUENCY BAND INFORMATION CALCULATION UNIT

PERSONAL HIGH-FREQUENCY BAND INFORMATION (TRAINING DATA)

216 PERSONAL HIGH-FREQUENCY BAND INFORMATION LEARNING UNIT

PERSONAL HIGH-FREQUENCY BAND INFORMATION GENERATING COEFFICIENT DATA

Fig. 12

```
        ┌─────────────────────────────────┐
        │   START LEARNING PROCESSING     │
        └─────────────────────────────────┘
                         │
                         ▼
        ┌─────────────────────────────────┐
        │  PERFORM RENDERING PROCESSING   │ S41
        └─────────────────────────────────┘
                         │
                         ▼
        ┌─────────────────────────────────┐
        │ PERFORM PERSONAL HRTF PROCESSING│ S42
        └─────────────────────────────────┘
                         │
                         ▼
        ┌─────────────────────────────────┐
        │        CALCULATE PERSONAL       │ S43
        │ HIGH-FREQUENCY BAND INFORMATION │
        └─────────────────────────────────┘
                         │
                         ▼
        ┌─────────────────────────────────┐
        │  PERFORM GENERAL HRTF PROCESSING│ S44
        └─────────────────────────────────┘
                         │
                         ▼
        ┌─────────────────────────────────┐
        │ CALCULATE GENERAL HIGH-FREQUENCY│ S45
        │         BAND INFORMATION        │
        └─────────────────────────────────┘
                         │
                         ▼
        ┌─────────────────────────────────┐
        │        GENERATE PERSONAL        │ S46
        │ HIGH-FREQUENCY BAND INFORMATION │
        │    GENERATING COEFFICIENT DATA  │
        └─────────────────────────────────┘
                         │
                         ▼
                 ┌───────────────┐
                 │      END      │
                 └───────────────┘
```

Fig. 13

301 ENCODER

OBJECT POSITION INFORMATION

FS96K OBJECT SIGNAL

312 ↓2 48K

314 RENDERING PROCESSING UNIT

VIRTUAL SPEAKER SIGNAL

315 GENERAL HRTF PROCESSING UNIT

GENERAL HRTF OUTPUT SIGNAL

316 GENERAL HIGH-FREQUENCY BAND INFORMATION CALCULATION UNIT

GENERAL HIGH-FREQUENCY BAND INFORMATION

313 OBJECT SIGNAL CODING UNIT

FS48K OBJECT SIGNAL

311 OBJECT POSITION INFORMATION CODING UNIT

OBJECT POSITION DATA

317 MULTIPLEXING UNIT

OUTPUT BIT STREAM

Fig. 14

```
        ┌─────────────────────────────┐
        │  START CODING PROCESSING    │
        └─────────────────────────────┘
                       │
                       ▼
        ┌─────────────────────────────┐ S71
        │    CODE OBJECT POSITION     │
        │        INFORMATION          │
        └─────────────────────────────┘
                       │
                       ▼
        ┌─────────────────────────────┐ S72
        │    PERFORM DOWN-SAMPLING    │
        └─────────────────────────────┘
                       │
                       ▼
        ┌─────────────────────────────┐ S73
        │      CODE OBJECT SIGNAL     │
        └─────────────────────────────┘
                       │
                       ▼
        ┌─────────────────────────────┐ S74
        │  PERFORM RENDERING PROCESSING │
        └─────────────────────────────┘
                       │
                       ▼
        ┌─────────────────────────────┐ S75
        │    PERFORM HRTF PROCESSING  │
        └─────────────────────────────┘
                       │
                       ▼
        ┌─────────────────────────────┐ S76
        │ CALCULATE GENERAL HIGH-FREQUENCY │
        │        BAND INFORMATION     │
        └─────────────────────────────┘
                       │
                       ▼
        ┌─────────────────────────────┐ S77
        │     PERFORM MULTIPLEXING    │
        └─────────────────────────────┘
                       │
                       ▼
             ┌─────────────────┐
             │       END       │
             └─────────────────┘
```

Fig. 15

## INTERNATIONAL SEARCH REPORT

| International application No. |
|---|
| **PCT/JP2021/030599** |

### A.    CLASSIFICATION OF SUBJECT MATTER

*G10L 19/008*(2013.01)i; *G10L 21/0388*(2013.01)i; *H04S 7/00*(2006.01)i
FI:   G10L19/008 200; H04S7/00 300; G10L21/0388 100

According to International Patent Classification (IPC) or to both national classification and IPC

### B.    FIELDS SEARCHED

Minimum documentation searched (classification system followed by classification symbols)

G10L19/00-19/26; G10L21/038-21/0388; H04S7/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

IEEE Xplore

### C.    DOCUMENTS CONSIDERED TO BE RELEVANT

| Category* | Citation of document, with indication, where appropriate, of the relevant passages | Relevant to claim No. |
|---|---|---|
| A | JP 2015-194666 A (SONY CORP) 05 November 2015 (2015-11-05) paragraphs [0238]-[0403] | 1-20 |
| A | JP 2016-529544 A (FRAUNHOFER-GESELLSCHAFT ZUR FOERDERUNG DER ANGEWANDTEN FORSCHUNG E.V) 23 September 2016 (2016-09-23) paragraphs [0138]-[0157] | 1-20 |

☐ Further documents are listed in the continuation of Box C.          ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **08 November 2021** | **16 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/030599**

| Patent document cited in search report | | | Publication date (day/month/year) | Patent family member(s) | | | Publication date (day/month/year) |
|---|---|---|---|---|---|---|---|
| JP | 2015-194666 | A | 05 November 2015 | WO | 2015/146057 | A1 | |
| | | | | paragraphs [0239]-[0404] | | | |
| | | | | US | 2018/0033440 | A1 | |
| | | | | US | 2020/0135216 | A1 | |
| | | | | CN | 106133828 | A | |
| | | | | CN | 111489758 | A | |
| | | | | EP | 3123470 | A1 | |
| | | | | EP | 3745397 | A1 | |
| | | | | JP | 2019-49745 | A | |
| | | | | JP | 2021-64013 | A | |
| | | | | KR | 10-2016-0136278 | A | |
| JP | 2016-529544 | A | 23 September 2016 | WO | 2015/010926 | A1 | |
| | | | | page 41, line 12 to page 44, line 33 | | | |
| | | | | WO | 2015/010934 | A1 | |
| | | | | US | 2016/0247508 | A1 | |
| | | | | US | 2016/0247509 | A1 | |
| | | | | US | 2016/0275957 | A1 | |
| | | | | US | 2019/0108842 | A1 | |
| | | | | US | 2019/0378522 | A1 | |
| | | | | US | 2021/0056979 | A1 | |
| | | | | EP | 2830051 | A2 | |
| | | | | EP | 2830052 | A1 | |
| | | | | EP | 3022734 | A1 | |
| | | | | EP | 3022735 | A1 | |
| | | | | CN | 105580073 | A | |
| | | | | CN | 105593931 | A | |
| | | | | CN | 111105805 | A | |
| | | | | CN | 111128205 | A | |
| | | | | CN | 111128206 | A | |
| | | | | KR | 10-2016-0033777 | A | |
| | | | | KR | 10-2016-0033778 | A | |
| | | | | JP | 2016-530788 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018110269 A